(19) Europäisches Patentamt
European Patent Office
Office européen des brevets

(11) **EP 1 025 953 B1**

(12) **EUROPÄISCHE PATENTSCHRIFT**

(45) Veröffentlichungstag und Bekanntmachung des Hinweises auf die Patenterteilung:
**31.03.2004  Patentblatt 2004/14**

(51) Int Cl.⁷: **B23Q 39/04**

(21) Anmeldenummer: **99109148.9**

(22) Anmeldetag: **08.05.1999**

(54) **Werkzeugmaschine**

Machine tool

Machine-outil

(84) Benannte Vertragsstaaten:
**CH DE ES FR GB IT LI**

(30) Priorität: **03.02.1999  DE 19904253**

(43) Veröffentlichungstag der Anmeldung:
**09.08.2000  Patentblatt 2000/32**

(73) Patentinhaber: **Index-Werke GmbH & Co. KG Hahn & Tessky**
**73730 Esslingen (DE)**

(72) Erfinder:
• **Link, Helmut Friedrich**
**73773 Aichwald 1 (Schanbach) (DE)**

• **Trautmann, Günther Heinrich**
**73230 Kirchheim/Nabern (DE)**

(74) Vertreter: **Hoeger, Stellrecht & Partner**
**Uhlandstrasse 14 c**
**70182 Stuttgart (DE)**

(56) Entgegenhaltungen:
EP-A- 0 433 722          DE-A- 3 234 121
DE-A- 19 649 016          US-A- 3 981 056
US-A- 4 635 340          US-A- 5 419 223
US-A- 5 697 270

**Beschreibung**

Die Erfindung betrifft eine Werkzeugmaschine umfassend ein Maschinengestell, mindestens eine Werkstückspindel, in welcher ein Werkstück spannbar und um eine Werkstückspindelachse rotierend antreibbar ist, einen Träger, auf welchem die Werkstückspindel angeordnet ist und mit welchem die Werkstückspindel relativ zum Maschinengestell und quer zur Werkstückspindelachse in mindestens zwei relativ zum Maschinengestell fest vorgegebene Spindelstationen bewegbar ist, und mindestens einen einer ausgewählten der Spindelstationen zugeordneten Werkzeugträger, umfassend einen am Maschinengestell gelagerten Querschlittenträger mit einem in einer X-Richtung zu der in der ausgewählten Spindelstation stehenden Werkstückspindel bewegbaren Querschlitten für ein Werkzeug.

Eine derartige Werkzeugmaschine ist beispielsweise aus der DE-A-196 49 016 bekannt.

Bei einer derartigen Werkzeugmaschine sind die Werkzeugträger so ausgebildet, daß sie in Richtung einer relativ zum Maschinengestell fest vorgegebenen X-Achse und gegebenenfalls einer Z-Achse bewegbar sind.

Damit sind die Werkzeugträger lediglich zum Einsatz von feststehenden Werkzeugen zur klassischen Drehbearbeitung geeignet oder auch zum Einsatz von rotierend angetriebenen Werkzeugen, mit welchen allerdings lediglich eine mittige Bearbeitung der Werkstücke möglich ist.

Aus der DE-B-33 28 327 ist ferner eine Möglichkeit bekannt, bei welcher mittels eines in einer X-Achse bewegbaren Revolvers auch eine außermittige Bearbeitung eines Werkstücks möglich ist.

Ausgehend von der DE 196 49 016 liegt der Erfindung die Aufgabe zugrunde, eine Werkzeugmaschine der gattungsgemäßen Art derart zu verbessern, daß bei im Bereich der Querschlitten raumsparender Bauweise eine mittige und außermittige Bearbeitung des Werkstücks mittels eines rotierenden Werkzeugs möglich ist.

Diese Aufgabe wird bei einer Werkzeugmaschine der eingangs beschriebenen Art erfindungsgemäß dadurch gelöst, daß das in der Werkstückspindel gehaltene Werkstücks mittels einer numerisch gesteuerten C-Achse um die Werkstückspindel in definierte Drehstellungen drehbar ist, daß der Querschlittenträger gegenüber dem Maschinengestell um eine zur Werkstückspindelachse der in der ausgewählten Spindelstation stehenden Werkstückspindel parallele Schwenkachse mittels eines Schwenkantriebs numerisch gesteuert verschwenkbar ist, daß auf dem Querschlitten eine Werkzeugspindel zur Aufnahme eines um eine zur Werkzeugspindelachse rotierend antreibbaren Werkzeugs vorgesehen ist und daß die Werkzeugspindelachse mit der X-Richtung einen Winkel von weniger als 45° einschließt.

Mit der erfindungsgemäßen Lösung besteht die Möglichkeit, bei extrem raumsparender Bauweise im Bereich des Querschlittens und ohne zusätzliche, senkrecht zur X-Richtung verlaufende Linearachse zur Bewegung des Werkzeugs, mittige und außermittige Bearbeitungen des Werkstücks durchzuführen.

Dabei wird im erfindungsgemäßen Sinn unter einer außermittigen Bearbeitung des Werkstücks jede Bearbeitung verstanden, bei welcher die Werkzeugspindelachse die Werkstückspindelachse nicht schneidet, sondern im Abstand von dieser verläuft.

Ferner ist im Sinne der vorliegenden Erfindung als X-Richtung jede Richtung bezeichnet, welche parallel zu einer quer zur Schwenkachse und vorzugsweise in Richtung der Werkstückspindel in der ausgewählten Spindelstation verläuft.

Prinzipiell könnte bei der erfindungsgemäßen Lösung die Maschinensteuerung das Verschwenken des Querschlittenträgers und das Verschwenken des Werkstücks in beliebiger Weise koordinieren, wobei die einzige Randbedingung darin besteht, daß das Werkzeug so relativ zum Werkstück ausgerichtet sein muß, daß Schneiden des Werkzeugs bei der Relativbewegung zwischen Werkstück und Werkzeug sich auf einer für das Spanabheben geeigneten Flugbahn bewegen.

Besonders vorteilhaft ist es, wenn sich die Werkzeugspindelachse in allen Positionen des Querschlittens in einer senkrecht zur Werkstückspindelachse der in der ausgewählten Spindelstation stehenden Werkstückspindel verlaufenden Ebene erstreckt.

Da rotierende Werkzeuge für Werkzeugmaschinen vorzugsweise so ausgebildet sind, daß deren Schneiden bei einer Bewegung relativ zum Werkstück senkrecht zur Werkzeugspindelachse oder in Richtung der Werkzeugspindelachse ein optimales Schneidergebnis liefern, ist vorzugsweise vorgesehen, daß eine Maschinensteuerung vorgesehen ist, mit welcher in einem Y-Achsen-Simulationsmodus das Werkstück um die Werkzeugspindelachse und der Querschlittenträger um die Schwenkachse derart simultan bewegbar sind, daß bei allen zur außermittigen Bearbeitung des Werkstücks durch das angetriebene Werkzeug vorgesehenen außermittigen Stellungen der Werkzeugspindelachse diese stets senkrecht zu einer relativ zum Werkstück feststehend angeordneten und in einer durch die Werkstückspindelachse hindurchverlaufenden virtuellen Ebene liegenden virtuellen Y-Achse verläuft.

Mit einem derartigen Y-Achsen-Simulationsmodus der Maschinensteuerung läßt sich vorteilhafterweise eine Bewegung des rotierenden Werkzeugs relativ zum Werkstück erzeugen, die den Bewegungen entspricht, die mit einer konventionellen Y-Achsenbewegung des Werkzeugs relativ zum Werkstück erreichbar sind, wobei die simulierte virtuelle Y-Achse in der virtuellen Ebene liegt und radial zur Werkstückspindelachse verläuft.

Um exakte Planflächen bearbeiten zu können, die insbesondere parallel zur Werkstückspindelachse verlaufen, ist vorgesehen, daß die Werkzeugspindelachse stets senkrecht auf der virtuellen Ebene steht.

Eine besonders günstige Ausbildung dieser Lösung sieht vor, daß die Maschinensteuerung in dem Y-Achsen-Simulationsmodus zusätzlich zur C-Achse und zur Schwenkachse die X-Achse derart steuert, daß eine durch die Gesamtheit aller rotierend bewegten Schneiden des rotierend angetriebenen Werkzeugs definierte Fläche in allen außermittigen Stellungen der Werkzeugspindelachse sich stets in konstanter Ausrichtung zu einem konstanten Abstand von der virtuellen Ebene bewegt. Diese Variante des Y-Achsen-Simulationsmodus hat den großen Vorteil, daß damit Planflächen am Werkstück erzeugbar sind, die quer zur X-Achse verlaufen, ohne daß eine Linearachse zur Bewegung des rotierenden Werkzeugs in Y-Richtung erforderlich ist.

Eine alternative Variante sieht vor, daß die Maschinensteuerung in dem Y-Achsen-Simulationsmodus in einer bestimmten außermittigen Stellung der Werkzeugspindelachse den diese Stellung bestimmenden Y-Wert der simulierten Y-Achse aufrechterhält und während des Aufrechterhaltens dieser Stellung durch Ansteuerung der X-Achse und gegebenenfalls der C-Achse und der Schwenkachse das Werkzeug senkrecht zu der virtuellen Ebene linear bewegt. Mit dieser Variante des erfindungsgemäßen Y-Achsen-Simulationsmodus läßt sich insbesondere in bekannter Weise außermittig das Einbringen einer Bohrung in ein Werkstück oder das Einbringen von Ausfräsungen durchführen.

Hinsichtlich der Anordnung der Werkzeugspindelachse relativ zur X-Achse wurde bislang lediglich festgelegt, daß diese einen Winkel von weniger als 45° miteinander einschließen wobei vorzugsweise der Winkel möglichst klein sein sollte.

Als besonders günstig hat es sich erwiesen, wenn die Werkzeugspindelachse sich parallel zur X-Achse erstreckt, so daß insbesondere bei der außermittigen Bearbeitung, bei welcher eine Bewegung des rotierenden Werkzeugs in Richtung der Werkzeugspindelachse erfolgen soll, diese Bewegung dadurch einfach steuerbar ist, daß keine Drehungen um die C-Achse und die Schwenkachse erforderlich sind, wenn eine Bewegung längs der X-Achse erfolgt, da zur Bewegung der Werkzeugspindelachse parallel zu ihrer Achsrichtung lediglich eine Bewegung des Querschlittens in Richtung der X-Achse erforderlich ist.

Hinsichtlich der Lagerung des Querschlittenträgers am Maschinengestell sind die unterschiedlichsten Lösungen denkbar. Beispielsweise wäre es denkbar, den Querschlittenträger noch durch ein zwischen diesem und dem Maschinengestell angeordnetes Trägerelement relativ zum Maschinengestell zu positionieren.

Besonders günstig ist es jedoch, wenn der Querschlittenträger um ein fest am Maschinengestell angeordnetes und die Schwenkachse festlegendes Drehlager drehbar ist, da hiermit eine einerseits einfache konstruktive Lösung zur Verfügung steht, die andererseits aber auch eine hohe Präzision hinsichtlich der schwenkbaren Führung des Querschlittenträgers relativ zum Maschinengestell darstellt.

Vorzugsweise ist aus Gründen einer möglichst im Arbeitsraum raumsparenden Lösung vorgesehen, daß ein Motor für den Schwenkantrieb auf einer dem Arbeitsraum abgewandten Seite des Maschinengestells, insbesondere des den Träger tragenden Ständers desselben, liegt.

Um den Querschlittenträger schwenken zu können, wäre es beispielsweise denkbar, über eine koaxial zur Schwenkachse verlaufende Welle auf den Querschlittenträger einzuwirken. Als besonders günstig hat es sich jedoch erwiesen, wenn der Querschlittenträger mit einem sich radial zur Schwenkachse erstreckenden Schwenkantriebsarm verbunden ist, auf welchen der Schwenkantrieb wirkt. Eine derartige Lösung hat den Vorteil, daß mit dieser unter Ausnutzung der Hebelgesetze einerseits ein sehr genaues Schwenken des Querschlittenträgers erreichbar ist und andererseits mit konstruktiv einfachen Mitteln hohe auf die Schwenkachse wirkende Momente aufgefangen werden können, so daß sich diese Lösung insbesondere hinsichtlich der erwünschten Präzision anbietet.

Um in einfacher Weise den Schwenkantriebsarm bewegen zu können, ist vorzugsweise vorgesehen, daß der Schwenkantrieb über ein Schwenkgetriebe auf den Schwenkantriebsarm wirkt. Ein derartiges Schwenkgetriebe kann dabei in unterschiedlichster Art und Weise ausgebildet sein. Beispielsweise kann es sich um ein zahnradähnliches Getriebe handeln, oder aber um ein Hebelgetriebe oder ein mit Zugelementen auf den Schwenkantriebsarm wirkendes Getriebe.

Vorteilhaft ist es jedoch im Hinblick auf ein präzises Verschwenken des Querschlittenträgers, wenn das Schwenkgetriebe spielarm, vorzugsweise im wesentlichen spielfrei ausgebildet ist.

Ein weiteres Ausführungsbeispiel sieht vor, daß das Schwenkgetriebe ein um eine zur Schwenkachse parallele Achse drehbares verzahntes Element umfaßt, welches auf eine Verzahnung des Schwenkantriebsarms wirkt.

Im Rahmen der Erläuterung der bisherigen Ausführungsbeispiele wurde lediglich davon ausgegangen, daß der Querschlittenträger um die Schwenkachse schwenkbar sein soll.

Insbesondere besteht bei der erfindungsgemäßen Lösung die Möglichkeit, eine Z-Bewegung durch Verschieben der Werkstückspindeln relativ zum Träger in Richtung der Werkstückspindelachse und somit in Z-Richtung zu erhalten.

Um jedoch die Flexibilität bei der Bearbeitung der Werkstücke möglichst groß zu machen, sieht eine vorteilhafte Lösung vor, daß der Querschlittenträger selbst in Z-Richtung relativ zum Maschinengestell verschiebbar ist. Mit dieser Lösung wird insbesondere erreicht, daß eine Bearbeitung des Werkstücks mit mehreren Werkzeugen erfolgen kann, und dabei die Relativbewegungen zwischen dem rotierend angetriebenen Werkzeug und dem Werkstück unabhängig von den zur Bearbeitung des Werkstücks mit anderen Werkzeugen in Z-Richtung erforderlichen Bewegungen erfolgen kann.

Um diese Bewegung des Querschlittenträgers in Z-Richtung zu realisieren, ist vorzugsweise vorgesehen, daß der Querschlittenträger mittels eines relativ zum Maschinengestell in der Z-Richtung verschiebbaren Längsführungselements am Maschinengestell gelagert ist.

Ein derartiges Längsführungselement könnte beispielsweise eine übliche Schlittenführung sein. Besonders günstig ist es jedoch, wenn das Längsführungselement als sich in der Z-Richtung erstreckender Führungsarm ausgebildet ist, welcher relativ zum Maschinengestell durch Führungen gelagert ist.

Hinsichtlich der Lagerung des Führungsarms am Maschinengestell sind ebenfalls die unterschiedlichsten Lösungen denkbar. Prinzipiell sind alle Ausbildungsformen eines derartigen Maschinengestells für die erfindungsgemäße Lösung einsetzbar. Eine besonders günstige Lösung sieht jedoch vor, daß der Führungsarm einen den Träger lagernden Ständer am Maschinengestell durchsetzt, d. h., daß der Führungsarm sich beispielsweise durch den Ständer hindurch vom Arbeitsraum weg erstreckt, um im Arbeitsraum möglichst viel kollisionsfreien Freiraum zur Verfügung zu haben. Besonders günstig ist es, wenn der Führungsarm an dem den Träger lagernden Ständer dabei auch noch so gelagert ist, daß das Durchsetzen des Ständers gleichzeitig zur Lagerung des Führungsarms vorteilhaft ausgenutzt werden kann.

Vorzugsweise ist dabei vorgesehen, daß der Führungsarm in am Maschinengestell gehaltenen Z-Führungen relativ zum Maschinengestell in der Z-Richtung bewegbar gelagert ist. Dabei kann beispielsweise der Führungsarm so ausgebildet sein, daß er die Z-Führungen durchsetzt, so daß eine stabile Führung des Führungsarms am Maschinengestell möglich ist.

Hinsichtlich der Kombination des Schwenklagers für den Querschlittenträger und den Führungsarm wurden bislang keine näheren Angaben gemacht. So sieht eine vorteilhafte Ausführungsform vor, daß das Schwenklager für den Querschlittenträger den Führungsarm trägt und somit auch bereits der Führungsarm durch das Schwenklager verschwenkbar ist.

Beispielsweise wäre es bei dieser Lösung immer noch denkbar, das Schwenklager und die Z-Führung als zwei getrennte Führungen auszubilden. Eine besonders günstige Lösung, insbesondere hinsichtlich des Raumbedarfs, sieht vor, daß das Schwenklager auch die Z-Führung für den Führungsarm bildet, so daß der Querschlittenträger mittels einer einzigen Führung am Maschinengestell gelagert ist, die einerseits ein Schwenken des Querschlittenträgers zuläßt und anderseits auch ein Verschieben desselben in der Z-Richtung, durch Verschieben des Führungsarms relativ zur Z-Führung.

Eine konstruktiv besonders vorteilhafte Lösung sieht vor, daß der Führungsarm als Pinolenkörper ausgebildet ist, welcher in dem Schwenklager in Z-Richtung verschiebbar gelagert ist, wobei der Pinolenkörper vorzugsweise so ausgebildet ist, daß eine Mantelfläche des Pinolenkörpers selbst eine Lagerfläche darstellt, welche in dem Schwenklager drehbar gelagert und relativ zum Schwenklager in Z-Richtung verschiebbar ist.

Im Zusammenhang mit der bisherigen Erläuterung der Ausführungsbeispiele wurde lediglich dargelegt, daß der Schwenkantriebsarm starr mit dem Querschlittenträger verbunden sein soll.

Insbesondere bei einer Lösung mit einem Führungsarm hat es sich als besonders günstig erwiesen, wenn der Schwenkantriebsarm drehfest mit dem Führungsarm verbunden ist und somit auf den Führungsarm einwirkt, um den Querschlittenträger zu verschwenken. Dabei besteht noch die Möglichkeit, den Schwenkantriebsarm in Z-Richtung relativ zum Führungsarm verschiebbar zu gestalten. Um jedoch eine möglichst hohe Präzision beim Verschwenken des Querschlittenträgers zu erreichen, ist vorzugsweise vorgesehen, daß der Schwenkantriebsarm starr mit dem Führungsarm verbunden ist.

Insbesondere bei einem starr mit dem Führungsarm verbundenen Schwenkantriebsarm ist es vorteilhaft, wenn der Schwenkantriebsarm durch ein in Richtung parallel zur Schwenkachse verlaufendes verzahntes Element bewegbar ist, so daß bei einer Verschiebung des Querschlittenträgers in der Z-Richtung der Schwenkantriebsarm in Längsrichtung des verzahnten Elements an diesem gleitet.

Vorzugsweise ist das verzahnte Element so ausgebildet, daß es sich in Richtung der Schwenkachse mit einer einem maximalen Verschiebeweg des Querschlittenträgers in Z-Richtung entsprechenden Länge erstreckt.

Hinsichtlich des Antriebs des Querschlittens sind die unterschiedlichsten Möglichkeiten denkbar.

Beispielsweise wäre es denkbar, den Querschlitten durch einen auf diesem sitzenden Quervorschubantrieb anzutreiben.

Besonders günstig ist es jedoch, wenn der Querschlittenträger mit einem Quervorschubantrieb zur gesteuerten Bewegung des Querschlittens in der X-Richtung versehen ist, so daß der einen nennenswerten Bauraum benötigende Quervorschubantrieb nicht den Raumbedarf im Bereich des Querschlittens vergrößert.

Besonders günstig hinsichtlich des Raumbedarfs ist eine Lösung, bei welcher der Quervorschubantrieb auf einer dem Querschlitten gegenüberliegenden Seite des Längsführungselements angeordnet ist. Damit besteht insbesondere die Möglichkeit, den Raum benötigenden Quervorschubantrieb auf einer dem Arbeitsraum gegenüberliegenden Seite des Längsführungselements anzuordnen, auf welcher die räumlichen Einschränkungen, die im Arbeitsraum der Werkzeugmaschine bestehen, nicht mehr vorliegen.

Ferner ist es vorteilhaft, wenn der Längsvorschubantrieb am Maschinengestell angeordnet ist, um den Querschlittenträger nicht auch mit dem Längsvorschubantrieb zu belasten.

Besonders günstig ist es, wenn auch der Längsvorschubantrieb auf einer dem Arbeitsraum abgewandten Seite des Maschinengestells angeordnet ist.

Insbesondere ist es günstig, wenn der Längsvorschubantrieb an dem den Träger für die Werkstückspindeln aufnehmenden Ständer auf einer dem Arbeitsraum gegenüberliegenden Seite angeordnet ist.

Hinsichtlich der Einwirkung auf den Querschlittenträger mittels des Längsantriebs sind die unterschiedlichsten Lösungen denkbar. Eine vorteilhafte Variante sieht vor, daß der Längsvorschubantrieb auf einen sich quer zum Längsführungselement erstreckenden Haltearm wirkt, welcher mit dem Längsführungselement in der Z-Richtung unverschieblich verbunden ist.

Diese Lösung stellt eine einfache konstruktive Möglichkeit zur Realisierung eines Längsvorschubs des Längsführungselements dar.

Eine besonders einfache Realisierungsform sieht dabei vor, daß der Längsvorschubantrieb über ein Längsvorschubgetriebe auf den Haltearm wirkt.

Ein derartiges Längsvorschubgetriebe läßt sich vorzugsweise in dem Maschinengestell selbst anordnen. Eine besonders günstige Art der Anordnung eines derartigen Längsvorschubgetriebes sieht vor, daß dieses in dem Ständer angeordnet ist, der den Träger für die Werkstückspindeln aufnimmt.

Damit ist auch bei dieser Realisierung der für den Längsvorschubantrieb benötigte Raum in einen Bereich der Werkzeugmaschine, d. h. insbesondere in einen Bereich des Maschinenständers, verlagert, in dem ohnehin ausreichend Raum zur Verfügung steht, ohne daß eine Beeinträchtigung des Raumbedarfs im Arbeitsraum selbst erfolgt.

Insbesondere um eine exakte Verschiebung des Haltearms in der Z-Richtung zu erhalten, ist vorzugsweise vorgesehen, daß der Haltearm um die Schwenkachse schwenkbar an dem Längsführungselement gehalten ist und somit die Schwenkbewegungen des Längsführungselements sich nicht auf die Verbindung zwischen dem Haltearm und dem Längsvorschubantrieb auswirken.

Vorzugsweise ist zur definierten Ausrichtung des Haltearms der Haltearm gegen ein Kippen um die Schwenkachse durch eine sich parallel zur Richtung der Schwenkachse erstreckende Kippabstützung gesichert. Eine derartige Kippabstützung kann unmittelbar am Maschinengestell vorgesehen sein.

Eine besonders vorteilhafte Lösung sieht dabei vor, daß das verzahnte Element, das zum Verschwenken des Querschlittenträgers eingesetzt ist, auch gleichzeitig dazu dient, die Kippabstützung zu bilden.

Um außerdem noch die Z-Bewegung des Querschlittenträgers realisieren zu können, ist vorzugsweise vorgesehen, daß der Haltearm an dem verzahnten Element parallel zur Richtung der Schwenkachse verschiebbar geführt ist.

Hinsichtlich der Ausbildung des Trägers für die Werkstückspindeln wurden keine spezifischen Ausführungen gemacht. Beispielsweise wäre es denkbar, den Träger für die Werkstückspindel als linear bewegbaren Träger für die Werkstückspindel auszuführen, um somit die Werkstückspindel zwischen beispielsweise zwei oder mehreren Spindelstationen linear bewegbar am Maschinengestell anzuordnen.

Eine hinsichtlich der Leistung besonders vorteilhafte Ausführungsform der erfindungsgemäßen Werkzeugmaschine sieht vor, daß der Träger als Spindeltrommel ausgebildet ist, welche an dem Maschinengestell um eine Trommelachse drehbar gelagert ist und welche eine Vielzahl von Werkstückspindeln trägt, die durch Drehen der Spindeltrommel um die Trommelachse in einzelne Spindelstationen und somit auch in die ausgewählte Spindelstation bewegbar sind.

Die Vorteile der erfindungsgemäßen Lösung sind insbesondere bei einer derartigen Mehrspindeldrehmaschine besonders eklatant, da bei dieser stets Raumprobleme bei der Anordnung der Werkzeugschlitten im Arbeitsraum bestehen.

Vorzugsweise ist die Spindeltrommel so ausgebildet, daß in dieser alle Werkstückspindeln mit ihren Werkstückspindelachsen in gleichen Winkelabständen um die Trommelachse angeordnet sind und vorzugsweise die Werkstückspindelachsen ebenfalls parallel zur Trommelachse verlaufen.

Darüber hinaus betrifft die Erfindung ein Verfahren zum Betreiben einer Werkzeugmaschine mit einem Maschinengestell, mit mindestens einer Werkstückspindel, in welcher ein Werkstück gespannt und um eine Werkstückspindelachse rotierend angetrieben werden kann, mit einem Träger, auf welchem die Werkstückspindel angeordnet ist und mit welchem die Werkstückspindel relativ zum Maschinengestell und quer zur Werkstückspindelachse in mindestens zwei relativ zum Maschinengestell fest vorgegebene Spindelstationen bewegt werden kann und mit mindestens einem einer ausgewählten Spindelstation zugeordneten Werkzeugträger, umfassend einen am Maschinengestell gelagerten Querschlittenträger mit einem Querschlitten für ein Werkzeug, der in einer X-Richtung zu der in der ausgewählten Spindelstation stehenden Werkstückspindel bewegt werden kann, welches erfindungsgemäß dadurch gekennzeichnet ist, daß das in der Werkstückspindel gehaltene Werkstück mittels einer numerisch gesteuerten C-Achse um die Werkstückspindelachse in definierte Drehstellungen bewegt wird, daß der Querschlittenträger gegenüber dem Maschinengestell um eine zur Werkstückspindelachse der in der ausgewählten Spindelstation stehenden Werkstückspindel parallele Schwenkachse mittels eines Schwenkantriebs numerisch gesteuert bewegt wird, daß auf dem Querschlitten eine Werkzeugspindel zur Aufnahme eines um eine Werkzeugspindelachse rotierend angetriebenen Werkzeugs vorgesehen ist und daß die Werkzeugspindelachse mit der X-Richtung einen Winkel von weniger als 45° einschließt und außerdem durch die Bewegung des Querschlittens in der X-Richtung und um die Schwenkachse in einer senkrecht zur Werkstückspindelachse der in der ausgewählten Spindelstation stehenden Werkstückspindel verlaufenden Ebene bewegt wird.

Darüber hinaus sieht eine Weiterbildung des erfindungsgemäßen Verfahrens vor, daß in einem Y-Achsen-Simulationsmodus das Werkstück um die Werkstückspindelachse und der Querschlittenträger um die Schwenkachse simultan derart bewegt werden, daß bei allen zur außermittigen Bearbeitung des Werkstücks durch das angetriebene Werkzeug vorgesehenen außermittigen Stellungen der Werkzeugspindelachse diese stets senkrecht auf einer relativ zum Werkstück feststehend angeordneten und durch die Werkstückspindelachse hindurchverlaufenden virtuellen Ebene steht, die durch Drehen des Werkstücks um die Werkstückspindelachse gedreht wird.

Mit dieser Lösung besteht die Möglichkeit, in gleicher Weise, wie im Zusammenhang mit der erfindungsgemäßen Werkzeugmaschine beschrieben, das rotierend angetriebene Werkzeug zum Werkstück stets so zu bewegen, wie wenn eine echte Y-Achse zum Bewegen des Werkzeugs relativ zum Werkstück vorhanden wäre.

Eine besonders günstige Ausbildung des erfindungsgemäßen Verfahrens zum Herstellen von Planflächen sieht vor, daß in dem Y-Achsen-Simulationsmodus zusätzlich zur C-Achse und zur Schwenkachse das Werkzeug in der X-Achse derart bewegt wird, daß sich eine Schneide des rotierend angetriebenen Werkzeugs in allen mittigen und außermittigen Stellungen der Werkzeugspindelachse stets in einem konstanten Abstand von der virtuellen Ebene bewegt.

Alternativ dazu sieht ein vorteilhaftes Ausführungsbeispiel des erfindungsgemäßen Verfahrens vor, daß in dem Y-Achsen-Simulationsmodus in einer bestimmten außermittigen Stellung der Werkzeugspindelachse der diese Stellung bestimmende Y-Wert der simulierten Y-Achse aufrechterhalten wird und während des Aufrechterhaltens dieser Stellung das Werkzeug durch die X-Achse und gegebenenfalls durch die C-Achse und die Schwenkachse senkrecht zur virtuellen Ebene linear bewegt wird. Damit sind alle Bearbeitungen möglich, welche beispielsweise Bohr- oder Ausfräsbearbeitungen darstellen, die auch mit einer echten Y-Achse zur Bewegung des Werkstücks ausführbar sind.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:

Fig. 1 eine perspektivische Darstellung eines Ausführungsbeispiels einer erfindungsgemäßen Drehmaschine;

Fig. 2 eine Draufsicht auf eine Spindeltrommel des Ausführungsbeispiels gemäß Fig. 1 in Richtung des Pfeils A in Fig. 1;

Fig. 3 einen Schnitt längs Linie 3-3 in Fig. 1 durch einen Werkzeugschlitten für feststehende Werkzeuge;

Fig. 4 einen Schnitt ähnlich Fig. 3 durch eine Variante des in Fig. 3 dargestellten Werkzeugschlittens;

Fig. 5 eine schematische Darstellung einer ersten Variante einer Hubkurve;

Fig. 6 eine schematische Darstellung einer zweiten Variante einer Hubkurve;

Fig. 7 einen Schnitt ähnlich Fig. 3 durch einen Werkzeugschlitten mit rotierend angetriebenem Werkzeug zur Bearbeitung eines Werkstücks mit simulierter Y-Achse;

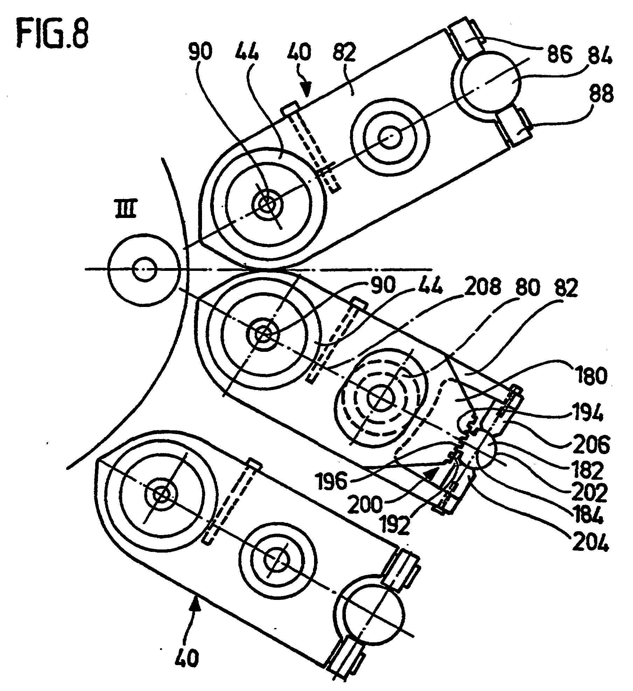

Fig. 8 einen Schnitt längs Linie 8-8 in Fig. 7 im Bereich von Spindelstation III;

Fig. 9 eine ausschnittsweise vergrößerte Draufsicht auf Spindelstation III bei mit einer Werkzeugspindel bestücktem Werkzeugschlitten und beginnender Fräsbearbeitung mit simulierter Y-Achse;

Fig. 10 eine Draufsicht ähnlich Fig. 9 bei beendeter Fräsbearbeitung mit simulierter Y-Achse;

Fig. 11 eine schematisch vereinfachte Darstellung der geometrischen Verhältnisse bei außermittiger Fräsbearbeitung mit simulierter Y-Achse und

Fig. 12 eine schematisch vereinfachte Darstellung der geometrischen Verhältnisse ähnlich Fig. 11 bei außermittiger Bohrbearbeitung mit simulierter Y-Achse.

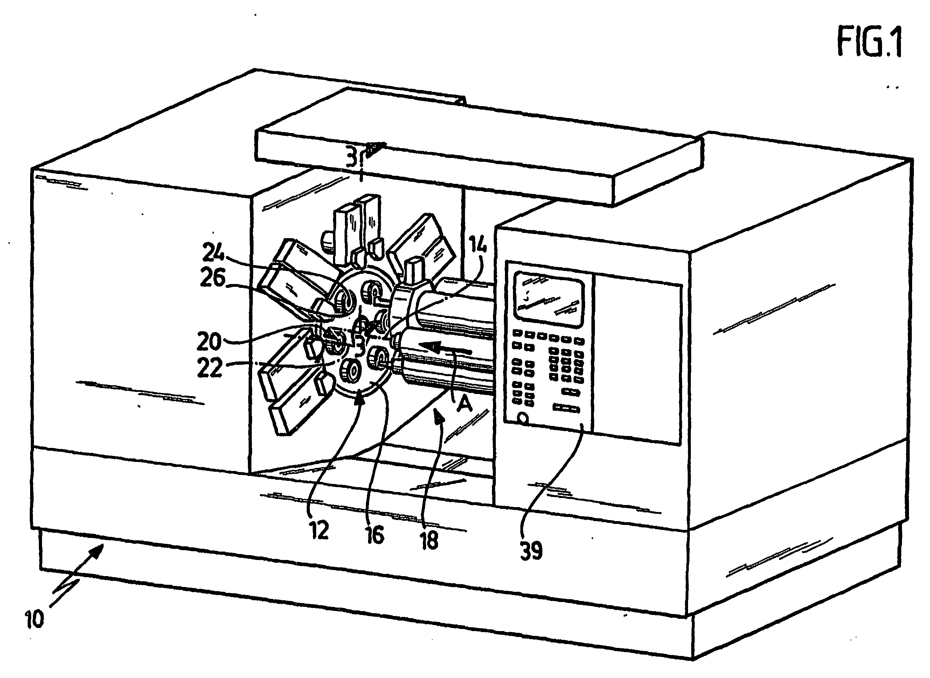

Ein erstes Ausführungsbeispiel einer erfindungsgemäßen Mehrspindeldrehmaschine, dargestellt in Fig. 1, weist ein als Ganzes mit 10 bezeichnetes Maschinengestell auf, an welchem eine als Ganzes mit 12 bezeichnete Spindeltrommel um eine Trommelachse 14 drehbar gelagert ist.

Die Spindeltrommel 12 ist mit einer Stirnseite 16 einem als Ganzes mit 18 bezeichneten Arbeitsraum zugewandt angeordnet und dient als Träger für eine Vielzahl von in gleichem radialem Abstand von der Trommelachse 14 und in gleichen Winkelabständen um diese herum angeordnete Werkstückspindeln 20, deren Werkstückspindelachse 22 beispielsweise parallel zur Trommelachse 14 verläuft. Die Werkstückspindeln 20 sind mit ihrer Stirnseite 24 ebenfalls dem Arbeitsraum 18 zugewandt und tragen vorzugsweise stirnseitig ein Werkstückspannmittel zum Spannen eines Werkstücks. Ferner sind die Werkstückspindeln 20 um die Spindelachse 22 als C-Achse numerisch gesteuert in definierte Drehstellungen drehbar.

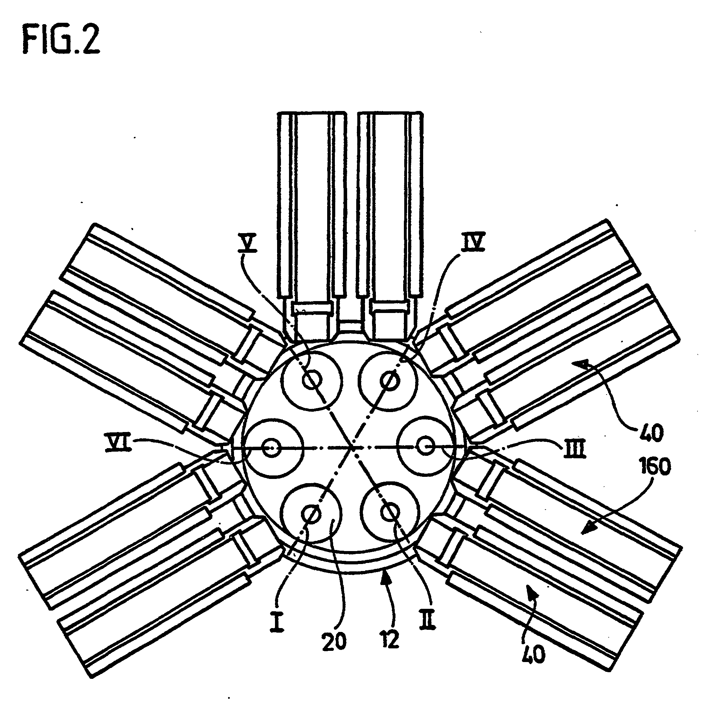

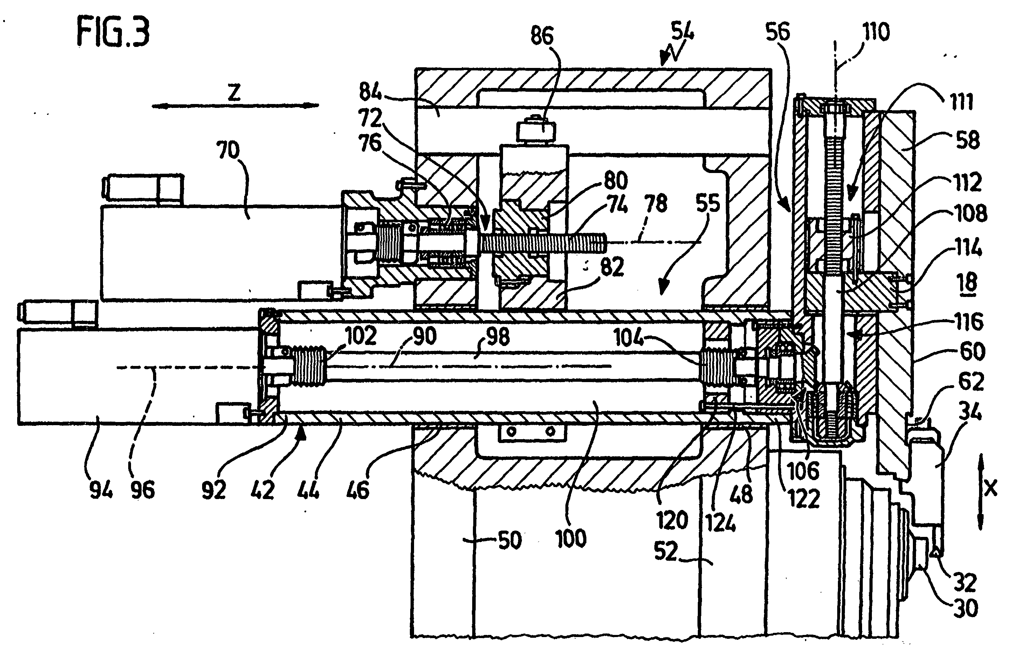

Die Spindeltrommel 12 ist, wie in Fig. 2 dargestellt, so drehbar, daß deren Werkstückspindeln 20 in unterschiedlichen Spindelstationen I bis VI relativ zum Maschinengestell 10 positionierbar sind. In diesen Spindelstationen I bis VI erfolgt eine Bearbeitung eines beispielsweise in Fig. 3 dargestellten Werkstücks 30 mittels einem oder mehreren Werkzeugen 32, die in Werkzeughaltern 34 aufgenommen sind. Zur Bearbeitung der Werkstücke 30 sind die Werkzeuge 32 zumindest in X-Richtung mittels einer in Fig. 1 dargestellten Maschinensteuerung 39 gesteuert bewegbar, vorzugsweise erfolgt auch noch zusätzlich eine gesteuerte Bewegung der Werkzeuge 32 in Z-Richtung.

Um in den einzelnen Spindelstationen IV bis VI möglichst viele Bearbeitungen mit möglichst unterschiedlichen Werkzeugen durchführen zu können, sind den Spindelstationen IV bis VI je zwei mit feststehenden Werkzeugen bestückbare Werkzeugschlitten 40 zugeordnet, die auf der Seite des Arbeitsraums 18 angeordnet sind, auf welcher auch die Spindeltrommel 12 angeordnet ist. Jeder dieser als Kreuzschlitten ausgebildeten Werkzeugschlitten 40 umfaßt, wie in Fig. 3 dargestellt, ein in Form einer Pinole ausgebildetes Längsschlittenelement 42, welches mit einem Gehäuserohr 44 in zwei im Abstand voneinander angeordneten und insgesamt eine Längsführung in Z-Richtung bildenden Linearführungen 46 und 48 gelagert, die in zwei im Abstand voneinander angeordneten Lagerschilden 50 und 52 eines Schlittenständers 54 angeordnet sind, in welchem auch die Spindeltrommel 12 gelagert ist.

Das als Pinole ausgebildete Längsführungselement 42 bildet einen Querschlittenträger 55 und trägt auf seiner dem Arbeitsraum 18 zugewandten Seite eine ebenfalls vom Querschlittenträger 55 umfaßte Querschlittenführung 56, an welcher ein Querschlitten 58 in X-Richtung verschiebbar angeordnet ist. Der Querschlitten 58 trägt auf seiner dem Arbeitsraum zugewandten Oberseite 60 eine Aufnahme 62 für den Werkzeughalter 34.

Die den Querschlitten 58 tragende Querschlittenführung 56 ist mitsamt dem Längsführungselement 42 in Z-Richtung verschiebbar, so daß dadurch auch eine Verschiebung des Werkzeugs 32 in Z-Richtung möglich ist.

Diese Verschiebung kann entweder durch eine definierte Positionierung des Längsführungselements 42 in Z-Richtung und Fixierung dieser Position relativ zum Schlittenständer 54 erfolgen oder gesteuert durch einen von der Maschinensteuerung 39 angesteuerten Längsvorschubmotor 70, welcher auf einer dem Arbeitsraum 18 abgewandten Seite des Schlittenständers 54 angeordnet ist und ein Längsvorschubgetriebe 72 antreibt.

Das Längsvorschubgetriebe 72 ist neben dem Längsschlittenelement 42 und zwischen den Lagerschilden 50 und 52 angeordnet und umfaßt eine sich parallel zum Gehäuserohr 44 des Längsschlittenelements 42 erstreckende Vorschubgewindespindel 74, welche am Schlittenständer 54 mittels eines am Lagerschild 50 sitzenden Axiallagers 76 drehbar, jedoch längs ihrer Achse 78 unverschiebbar gelagert ist.

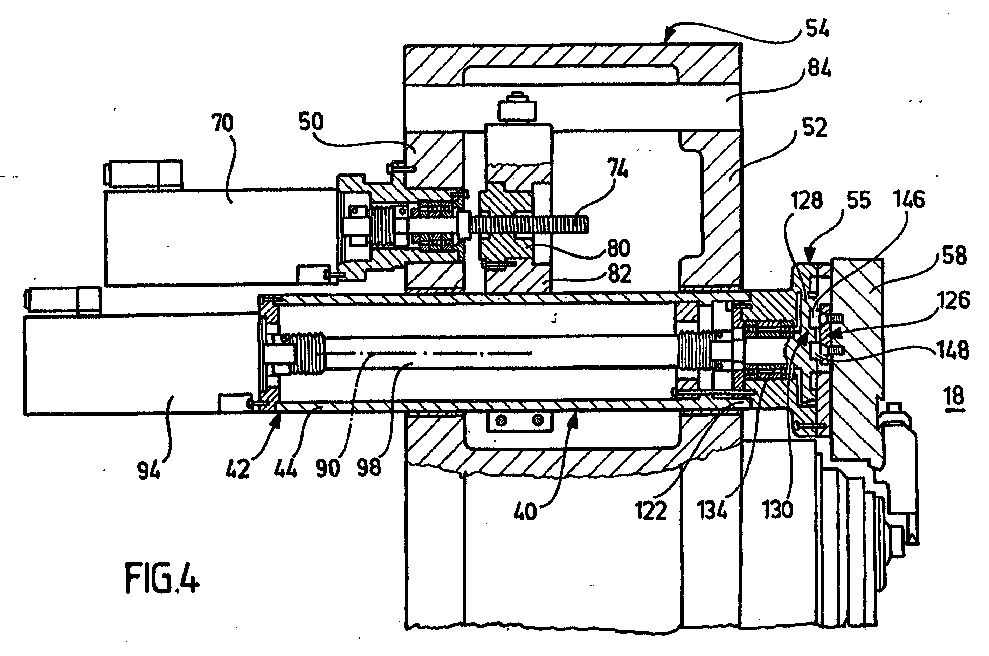

Mit der Vorschubgewindespindel 74 ist eine von dieser durchsetzte Spindelmutter 80 in Z-Richtung verschiebbar. Die Spindelmutter 80 sitzt dabei, wie in Fig. 3 und Fig. 4 dargestellt, in einem Haltearm 82, welcher das Gehäuserohr 44 des Längsschlittenelements 42 klemmend umgreift und sich quer zu diesem erstreckt und die Spindelmutter 80 in einer Aufnahme aufnimmt. Der Haltearm 82 erstreckt sich ferner vom Gehäuserohr 44 ausgehend über die Spindelmutter 80 hinaus bis zu einer Führungsstange 84, welche sich parallel zur Z-Richtung zwischen den Lagerschilden 50 und 52 erstreckt und damit fest am Schlittenständer 54 gehalten ist. Der Haltearm 82 gleitet mit Führungselementen, vorzugsweise beiderseits der Führungsstange 84 anliegenden Führungsrollen 86 und 88 an derselben. Die Führungsstange 84 und die Führungsrollen 86 und 88 stellen zusammen mit dem Haltearm 82 eine Verdrehsicherung des Längsschlittenelements 42 gegen Verdrehungen um dessen Längsachse 90 dar.

Durch Verdrehen der Vorschubgewindespindel 74 und die damit verbundene Verschiebung der Spindelmutter 80 in Z-Richtung ist somit eine durch die Maschinensteuerung 39 steuerbare Bewegung des Längsschlittenelements 42 in Z-Richtung möglich.

Zum Antrieb des Querschlittens 58 ist, wie ebenfalls in Fig. 3 dargestellt, an einem dem Arbeitsraum 18 abgewandten Ende 92 des Längsschlittenelements 42 ein Quervorschubmotor 94 angeordnet, dessen Motorwelle 96 parallel zur Längsachse 90 des Längsschlittenelements 42 verläuft und vorzugsweise koaxial zur Achse 90 angeordnet ist. Der Quervorschubmotor 94 treibt eine Antriebswelle 98, welche einen inneren Hohlraum 100 des Gehäuserohrs 44 des Längsschlittenelements 42 ungefähr koaxial zur Längsachse 90 durchsetzt und vorzugsweise mit zwei im Abstand voneinander angeordneten drehsteifen Gelenken 102 und 104 versehen ist.

Die Antriebswelle 98 treibt ein als Ganzes mit 106 bezeichnetes Winkelgetriebe, das seinerseits eine in der Querschlittenführung 56 angeordnete Quervorschubgewindespindel 108 antreibt, welche drehbar und längs ihrer Spindelachse 110 unverschieblich endseitig in der Querschlittenführung 56 gelagert ist. Die Quervorschubgewindespindel 108 durchsetzt dabei ihrerseits eine Spindelmutter 112, welche mit der Quervorschubgewindespindel 108 ein Quervorschubgetriebe 111 bildet. Die Spindelmutter 112 ist über einen Spindelmutterhalter 114 mit dem Querschlitten 58 fest verbunden, so daß durch ein Drehen der Quervorschubgewindespindel 108 über das Winkelgetriebe 106 sowie über die Antriebswelle 98 mittels des Quervorschubmotors 94 der Querschlitten 58 entsprechend der Verschiebung der Spindelmutter 112 in X-Richtung durch die Maschinensteuerung 39, welche den Quervorschubmotor 94 ansteuert, steuerbar ist. Der Quervorschubmotor 94 treibt somit über die Antriebswelle 98 ein als Ganzes mit 116 bezeichnetes Quervorschubgetriebe, umfassend das Winkelgetriebe 106, welches beispielsweise als Kegelradgetriebe angeordnet ist, und die jeweils endseitig gelagerte Quervorschubspindel 108 mit der auf dieser sitzenden Spindelmutter 112.

Eine Verbindung der Querschlittenführung 56 mit dem Gehäuserohr 44 des Längsführungselements 42 erfolgt vorzugsweise mittels eines Ringflansches 120, welcher in einem dem Arbeitsraum 18 zugewandten Ende 122 des Gehäuserohrs 44 radial nach innen absteht und von Verankerungselementen 124, beispielsweise Schrauben, durchsetzt ist, welche ebenfalls in der Querschlittenführung 56 verankert sind und somit die Querschlittenführung 56 am Ende 122 des Gehäuserohrs 44 fixieren.

Bei einer Variante des Werkzeugschlittens 40, dargestellt in Fig. 4, sind diejenigen Teile, die mit denen des ersten Ausführungsbeispiels identisch sind, mit denselben Bezugszeichen versehen.

Im Gegensatz zum ersten Ausführungsbeispiel ist ein von der Antriebswelle 98 angetriebenes Quervorschubgetriebe 126 vorgesehen, welches eine von der Antriebswelle 98 angetriebene Hubkurve 128 aufweist, welche einen Kurvenfolger 130 mit zwei Kurvenfolgerelementen 146, 148 wirkt, die mit dem Querschlitten 58 fest verbunden sind.

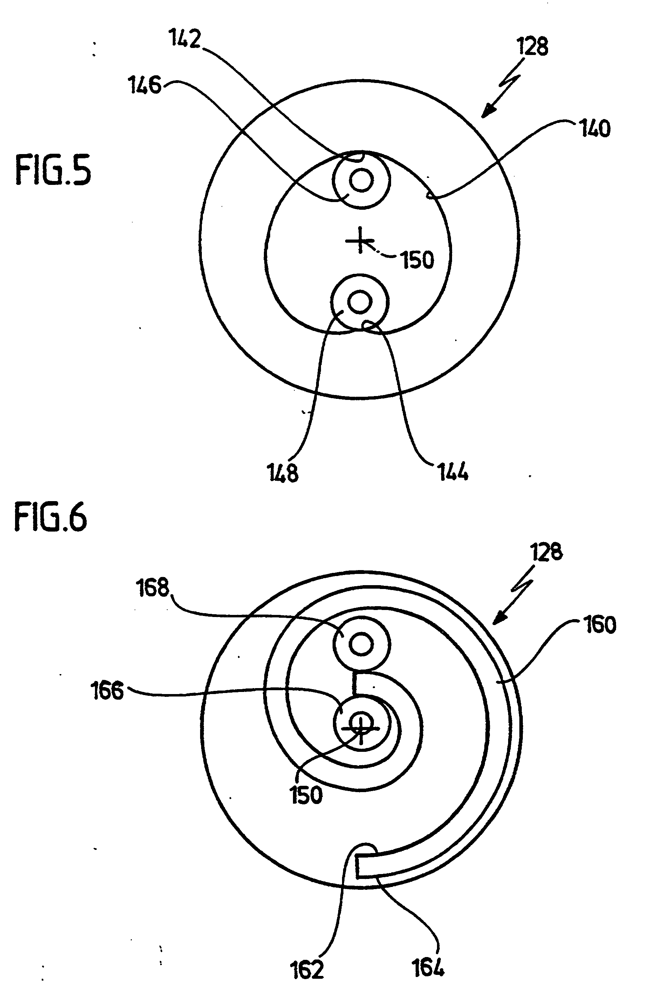

Die Hubkurve 128 ist dabei mittels eines Drehlagers 134 an dem dem Arbeitsraum 18 zugewandten Ende 122 des Gehäuserohrs 44 des Längsführungselements 42 drehbar gelagert und, wie in Fig. 5 und 6 dargestellt, entweder als Hohlkurve mit einer inneren Hubfläche 140 ausgebildet, welche mit jeweils einander gegenüberliegenden Hubflächenbereichen 142 und 144 auf zwei Kurvenfolgerkörper 146 und 148, beispielsweise ausgeführt als Rollen, wirkt, und die damit deren Position in X-Richtung entsprechend der Drehstellung der Hubkurve 128 eindeutig vorgibt. Hierzu ist vorzugsweise die Hubfläche 140 so ausgebildet, daß stets die einander gegenüberliegenden Hubflächenbereiche 142, 144 denselben Abstand voneinander aufweisen, dabei allerdings die Kurvenfolgerelemente 146 und 148 in unterschiedlichen radialen Abständen zu einer Drehachse 150 der Hubkurve 128 positionieren.

Bei einem zweiten Ausführungsbeispiel der Hubkurve 128 ist die Hubkurve 128 selbst als spiralförmiger Wulst 160 ausgebildet und weist zwei einander gegenüberliegende Hubflächen 162 und 164 auf, an welchen zwei Kurvenfolgerelemente 166 bzw. 168 stets anliegen. Durch Drehung der spiralförmigen Hubkurve 160 um die Drehachse 150 ist somit eine Positionierung der Kurvenfolgerelemente 166 und 168 in unterschiedlichem radialem Abstand von der Drehachse 150 möglich, wobei die mit dem Querschlitten 58 verbundenen Kurvenfolgerelemente 166 und 168 den Querschlitten 58 in X-Richtung eindeutig positionieren.

Bei den bislang beschriebenen Werkzeugschlitten 40, welche auf der Seite des Arbeitsraum 18 angeordnet sind, auf welcher auch die Spindeltrommel 12 angeordnet ist, handelt es sich vorwiegend um Werkzeugschlitten 40 zur gesteuerten Bewegung von Außenbearbeitungswerkzeugen 32.

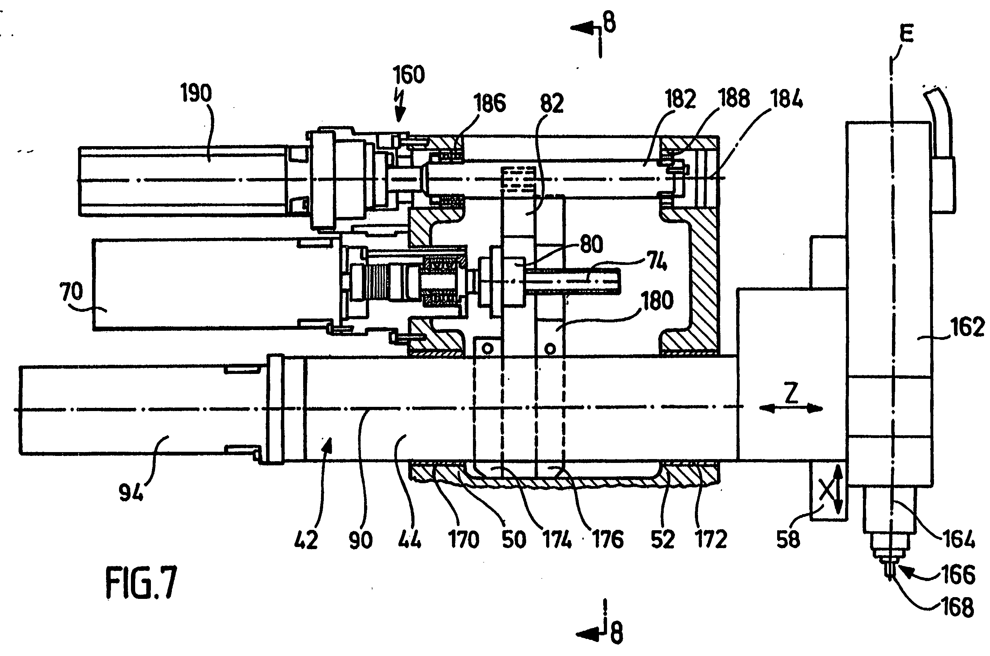

Bei einem als Ganzes mit 160 bezeichneten Werkzeugschlitten (Fig. 7) ist der Querschlitten 58 in gleicher Weise antreibbar wie bei den Werkzeugschlitten 40, allerdings trägt der in X-Richtung bewegbare Querschlitten 58 eine als Ganzes mit 162 bezeichnete Werkzeugspindel, in welcher ein um eine Werkzeugspindelachse 164 rotierend antreibbares rotierendes Werkzeug 166, beispielsweise ein Fräswerkzeug, angeordnet ist.

Hinsichtlich der Ausbildung des Quervorschubmotors 94 für den Querschlitten 58 und des Antriebs des Querschlittens 58 wird auf die Ausführungen zu den vorherigen Ausführungsbeispielen Bezug genommen.

Im Gegensatz zu dem Werkzeugschlitten 40 ist das Gehäuserohr 44 des Längsschlittenelements 42 nicht in den Z-Führungen 46 und 48 gehalten, sondern in in den Lagerschilden 50 und 52 angeordneten Führungen 170 und 172, welche nicht nur eine Verschiebung des Gehäuserohrs 44 in Z-Richtung zulassen, sondern auch eine Drehung des Gehäuserohrs 44 um die Längsachse 90 desselben. Zum Verschieben des Längsschlittenelements 42 in der Z-Richtung ist der Haltearm 82 um die Längsachse 90 des Gehäuserohrs 44 drehbar, jedoch in Z-Richtung unverschieblich an diesem gelagert, beispielsweise zwischen zwei auf dem Gehäuserohr 44 festliegenden Lagerteilen 174 und 176. In dem Haltearm 82 ist ferner auch noch die Spindelmutter 80 angeordnet, die in gleicher Weise wie bei den voranstehenden Werkzeugschlitten 40 durch den Längsvorschubmotor 70 antreibbar ist.

Zum definierten Schwenken des Längsschlittenelements 42 ist beispielsweise das Lagerteil 176 mit einem sich von dem Gehäuserohr 44 weg erstreckenden Schwenkantriebsarm 180 versehen, welcher sich bis zu einer verzahnten Welle 182 erstreckt, die um eine Wellenachse 184 drehbar ist, welche parallel zur Längsachse 90 verläuft, wobei die verzahnte Welle 182 vorzugsweise auf einer dem Längsschlittenelement 42 gegenüberliegenden Seite der Vorschubgewindespindel 74 angeordnet ist.

Die verzahnte Welle 182 ist ihrerseits mittels Drehlagern 186 und 188 in den Lagerschilden 50 und 52 drehbar gelagert und durch einen auf einer dem Arbeitsraum 18 gegenüberliegenden Seite des Schlittenständers 54 angeordneten Schwenkantriebsmotor 190 antreibbar, der seinerseits an dem Lagerschild 50 gehalten ist.

Die verzahnte Welle 182 weist vorzugsweise lediglich in einem einer umfangsseitigen Verzahnung 192 des Schwenkantriebsarms 180 zugewandten Umfangsbereich 194 eine Verzahnung 196 auf, die mit der Verzahnung 192 des Schwenkantriebsarms in Eingriff bringbar ist. Vorzugsweise bildet die verzahnte Welle 182 mit dem Schwenkantriebsarm 180 ein als Ganzes mit 200 bezeichnetes Schwenkgetriebe, welches vorzugsweise spielarm, noch besser spielfrei, ausgebildet ist und mit welchem der Schwenkantriebsmotor 190 in der Lage ist, das Längsschlittenelement 42 um seine Längsachse 90 in einem festgelegten Winkelbereich zu verschwenken.

Die verzahnte Welle 182 bildet ferner mit ihren nicht verzahnten Umfangsbereichen 202 eine Führungsfläche für an dem Haltearm 82 angeordnete Führungskörper 204 und 206, welche hinsichtlich ihrer Funktion der der Führungsrollen 86 und 88 entsprechen, so daß der Haltearm 82 mit seiner Mittelachse 208, welche vorzugsweise durch die Längsachse 90 und durch die Achse 184 verläuft, in stets derselben Ausrichtung relativ zum Maschinengestell 10 in der Z-Richtung bewegbar ist und somit eine verdrehfeste Aufnahme für die Spindelmutter 80 zur spielfreien Übertragung der Z-Bewegung der Spindelmutter 80 auf das Längsschlittenelement 42 darstellt, um eine präzise Positionierung des Längsschlittenelements 42 in der Z-Richtung zu gewährleisten.

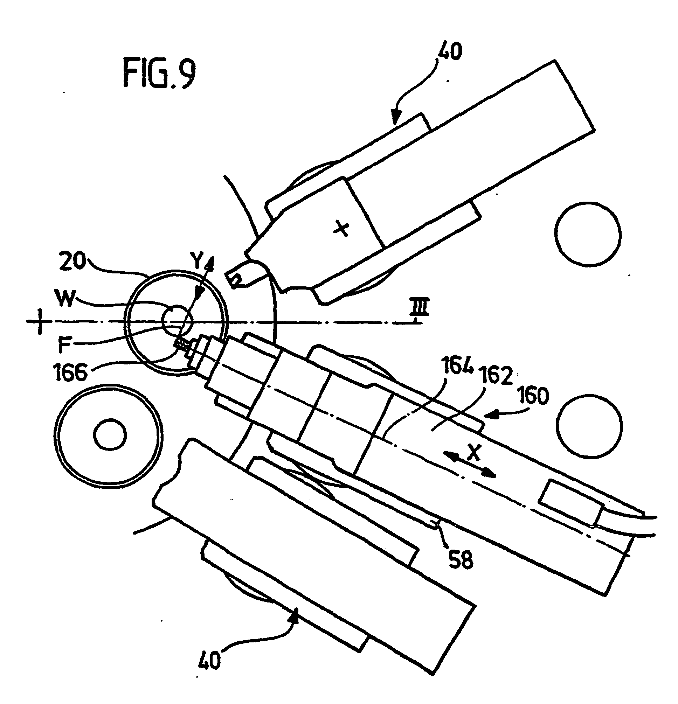

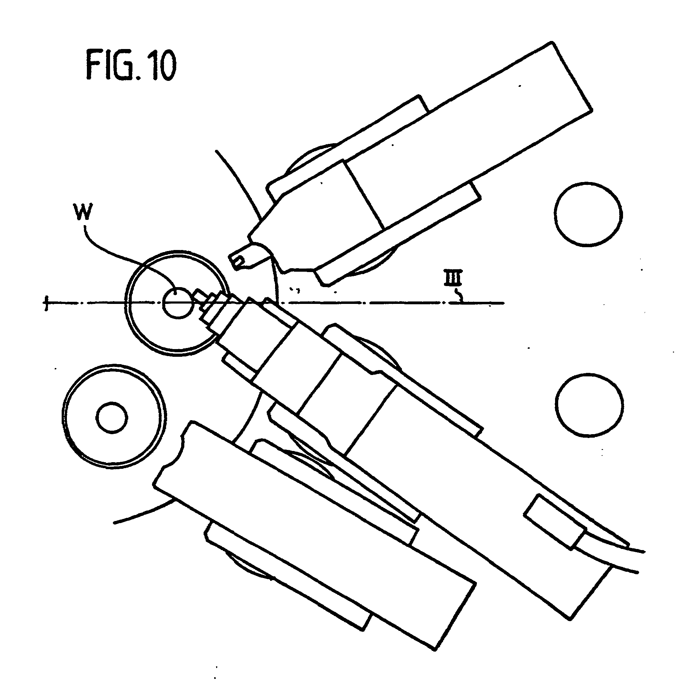

Außerdem ist durch das Schwenkgetriebe 200 der Schwenkantriebsarm 180 und damit auch das Längsschlittenelement 42 zusätzlich zur Bewegbarkeit in Z-Richtung um die Längsachse 90 als Schwenkachse verschwenkbar, so daß, wie in Fig. 9 und 10 dargestellt, eine Bearbeitung eines Werkstücks W dergestalt möglich ist, daß das rotierende Werkzeug 166 in einer senkrecht zur X-Achse verlaufenden und relativ zum Werkstück W feststehend angeordneten Y-Richtung bewegbar ist und beispielsweise eine plane Fläche F am Werkstück W durch Fräsen mit dem rotierenden Werkzeug 166 erzeugbar ist.

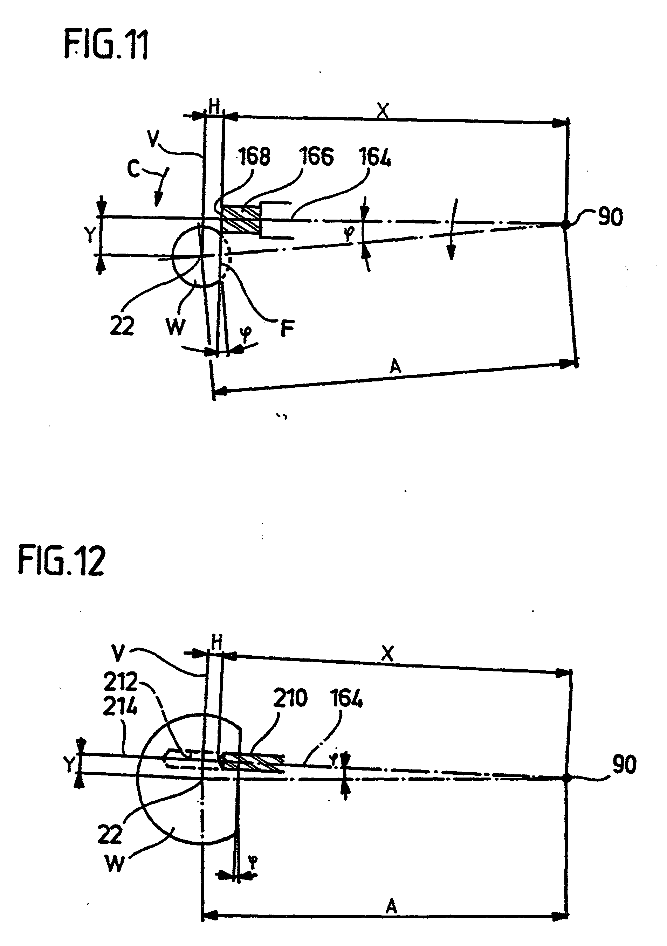

Hierzu wird, wie in Fig. 11 dargestellt, eine virtuelle Ebene V definiert, welche durch die Werkstückspindelachse 22 hindurch verläuft und in welcher die senkrecht zur Werkstückspindelachse 22 verlaufende Y-Richtung der simulierten Y-Achse liegt. Ferner wird die Werkzeugspindelachse 164 beispielsweise so ausgerichtet, daß sie stets auf der fest relativ zum Werkstück W definierten virtuellen Ebene V steht.

Ein Fräsen einer zur virtuellen Ebene V parallelen Planfläche F erfolgt nun in einem Y-Achsen-Simulationsmodus der Maschinensteuerung 39 dergestalt, daß, wie in Fig. 11 dargestellt, die Maschinensteuerung 39 aufgrund der numerisch steuerbaren C-Achse das Werkstück W um die Werkstückspindelachse 22 und gleichzeitig die Werkzeugspindelachse 164 durch Schwenken des Querschlittens 58 um die Achse 90 mit gleichem Drehsinn verschwenkt, wobei aufgrund des Verschwenkens des Werkstücks W um die C-Achse die virtuelle Ebene V ebenfalls mit dem Werkstück W mitverschwenkt wird. Dabei hat die Maschinensteuerung 39 die Bedingung einzuhalten, daß die Werkzeugspindelachse 164 stets senkrecht auf der virtuellen Ebene V steht. Im Falle der Planfläche F ist zusätzlich noch der Querschlitten 58 in X-Richtung so zu bewegen, daß trotz Drehen des Werkstücks W und somit auch der virtuellen Ebene V mittels der C-Achse der Abstand einer Stirnfläche 168 des Fräswerkzeugs 166 von der virtuellen Ebene V konstant bleibt.

Bei der gesamten Schwenkbewegung der Werkzeugspindelachse 164 um die Schwenkachse 90 bewegt sich die Werkzeugspindelachse 164 in einer Ebene E, welche in der Darstellung der Fig. 11 mit der Zeichnungsebene zusammenfällt und welche senkrecht zur Schwenkachse 90 und senkrecht zur Werkstückspindelachse 22 verläuft.

Für den Sonderfall, daß die Werkzeugspindelachse 164 radial zur Schwenkachse 90 angeordnet ist, ergibt sich aufgrund der Gleichungen des Pythagoras für das Bearbeiten der Planfläche F die Gleichung

$$H + X = \sqrt{A^2 - Y^2},$$

wobei H der Abstand der Fläche F von der virtuellen Ebene V ist, A der durch den Maschinenständer 10 der Werkzeugmaschine festgelegte Abstand der Werkstückspindelachse 22 von der Schwenkachse 90 und X der Abstand der Stirnfläche 168 des Fräswerkzeugs 166 von der Schwenkachse 90 darstellt. Die Winkel $\varphi$ sind in diesem Fall ebenfalls gleich groß und werden in gleicher Weise geändert, wobei sich der Winkel $\varphi$ aus der Gleichung ergibt:

$$\text{Sinus } \varphi = \frac{Y}{A}.$$

Es sind aber beim Fräsen von Planflächen noch Varianten der beschriebenen Vorgehensweise denkbar.

Zunächst ist es möglich, die Werkzeugspindelachse 164 parallelverschoben zur X-Achse anzuordnen.

Eine weitere Möglichkeit ist die, daß die Werkzeugspindelachse 164 nicht parallel zur X-Achse verläuft, sondern in einem Winkel zu dieser, wobei der Winkel in der X-Z-Ebene und/oder in der X-Y-Ebene liegen kann. Im Extremfall verläuft die Werkzeugspindelachse 164 windschief zur X-Achse.

Anstelle des Vorsehens eines Fräswerkzeugs 166 besteht auch die Möglichkeit, ein Bohrwerkzeug 210 einzusetzen, mit welchem eine außermittig liegende Bohrung 212 in das Werkstück W eingebracht werden soll, wobei die Bohrung 212 mit ihrer Mittelachse 214 um den Wert Y in Richtung der simulierten virtuellen Y-Achse gegenüber der Werkstückspindelachse 22 außermittig versetzt liegen soll.

In diesem Fall erfolgt mittels der C-Achse eine Drehung des Werkstücks W dergestalt, daß die Werkzeugspindelachse 164 senkrecht auf der virtuellen Ebene V steht und diese in einem Punkt im Abstand Y von der Werkstückspindelachse 22 schneidet.

Verläuft die Werkzeugspindelachse 164 in einer radialen Richtung der Schwenkachse 90, so besteht durch eine ausschließliche Vorschubbewegung in X-Richtung nunmehr die Möglichkeit, die Bohrung 212 außermittig in das Werkstück W einzubringen, wobei das Schwenken um die Schwenkachse 90 und das Drehen des Werkstücks W um die C-Achse lediglich zur anfänglichen Vorgabe des Winkels φ erforderlich ist und sich der Winkel φ aus der Gleichung

$$\text{Sinus } \varphi = \frac{Y}{A}$$

ergibt, d. h. daß durch den Winkel φ der Abstand der Achse 214 der Bohrung 212 von der Werkstückspindelachse 22 festlegbar ist und während der ganzen Bohrbearbeitung festgelegt bleibt.

Auch bei dem Bohrwerkzeug 210 sind neben der vorstehend beschriebenen speziellen Ausrichtung der einzelnen X-, Y- und Z-Richtung zu der Werkstückspindelachse 22 und der Werkzeugspindelachse 164 dieselben Modifikationen, wie im Zusammenhang mit dem Fräswerkzeug beschrieben, denkbar.

**Patentansprüche**

1. Werkzeugmaschine umfassend ein Maschinengestell (10), mindestens eine Werkstückspindel (20), in welcher ein Werkstück spannbar und um eine Werkstückspindelachse (22) rotierend antreibbar ist, einen Träger, auf welchem die Werkstückspindel angeordnet ist und mit welchem die Werkstückspindel relativ zum Maschinengestell und quer zur Werkstückspindelachse in mindestens zwei relativ zum Maschinengestell fest vorgegebene Spindelstationen bewegbar ist, und mindestens einen einer ausgewählten der Spindelstationen zugeordneten Werkzeugträger, umfassend einen am Maschinengestell gelagerten Querschlittenträger (55) mit einem in einer X-Richtung zu der in der ausgewählten Spindelstation stehenden Werkstückspindel bewegbaren Querschlitten für ein Werkzeug, **dadurch gekennzeichnet , daß** das in der Werkstückspindel (20) gehaltene Werkstück (W) mittels einer numerisch gesteuerten C-Achse um die Werkstückspindelachse (22) in definierte Drehstellungen drehbar ist, daß der Querschlittenträger (55) gegenüber dem Maschinengestell (10) um eine zur Werkstückspindelachse (22) der in der ausgewählten Spindelstation (III) stehenden Werkstückspindel (20) parallele Schwenkachse (90) mittels eines Schwenkantriebs (190) numerisch gesteuert verschwenkbar ist, daß auf dem Querschlitten (58) eine Werkzeugspindel (162) zur Aufnahme eines um eine Werkzeugspindelachse (164) rotierend antreibbaren Werkzeugs (166, 210) vorgesehen ist, und daß die Werkzeugspindelachse (164) mit der X-Richtung einen Winkel von weniger als 45° einschließt.

2. Werkzeugmaschine nach Anspruch 1, **dadurch gekennzeichnet, daß** die Werkzeugspindelachse (164) sich in allen Positionen des Querschlittens (58) in einer senkrecht zur Werkstückspindelachse (22) der in der ausgewählten Spindelstation (III) stehenden Werkstückspindel (20) verlaufenden Ebene (E) erstreckt.

3. Werkzeugmaschine nach Anspruch 1 oder 2, **dadurch gekennzeichnet, daß** eine Maschinensteuerung (39) vorgesehen ist, mit welcher in einem Y-Achsen-Simulationsmodus das Werkstück (W) um die Werkstückspindelachse (22) und der Querschlittenträger (55) um die Schwenkachse (90) derart simultan bewegbar sind, daß bei allen zur außermittigen Bearbeitung des Werkstücks (W) durch das angetriebene Werkzeug (166, 210) vorgesehenen außermittigen Stellungen der Werkzeugspindelachse (164) diese stets senkrecht zu einer relativ zum Werkstück (W) feststehend angeordneten und in einer durch die Werkstückspindelachse (22) hindurch verlaufenden virtuellen Ebene (V) liegenden virtuellen Y-Achse verläuft.

4. Werkzeugmaschine nach einem der Ansprüche 1 bis 3, **dadurch gekennzeichnet, daß** die Maschinensteuerung (39) in dem Y-Achsen-Simulationsmodus zusätzlich zur C-Achse und zur Schwenkachse die X-Achse derart steuert, daß sich eine Schneide des rotierend angetriebenen Werkzeugs (166) in allen außermittigen Stellungen der Werkzeugspindelachse (164) stets in einem konstanten Abstand (H) von der virtuellen Ebene (V) bewegt.

5. Werkzeugmaschine nach einem der Ansprüche 1 bis 3, **dadurch gekennzeichnet, daß** die Maschinensteuerung (39) in dem Y-Achsen-Simulationsmodus in einer bestimmten außermittigen Stellung der Werkzeugspindelachse (164) einen dieser Stellung entsprechenden Y-Wert aufrechterhält und während des Aufrechterhaltens dieser Stellung mindestens durch Steuerung der X-Achse das Werkzeug (210) senkrecht zu der virtuellen Ebene (V) linear bewegt.

6. Werkzeugmaschine nach einem der voranstehenden Ansprüche, **dadurch gekennzeichnet, daß** die Werkzeugspindelachse (164) sich parallel zur X-Achse erstreckt.

7. Werkzeugmaschine nach einem der voranstehenden Ansprüche, **dadurch gekennzeichnet, daß** der Querschlittenträger (55) um ein fest am Maschinengestell (10) angeordnetes und die Schwenkachse (90) festlegendes Drehlager (170, 172) drehbar ist.

8. Werkzeugmaschine nach einem der voranstehenden Ansprüche, **dadurch gekennzeichnet, daß** der Querschlittenträger (55) mit einem sich radial zur Schwenkachse (90) erstreckenden Schwenkantriebsarm (180) verbunden ist, auf welchen der Schwenkantrieb (190) wirkt.

9. Werkzeugmaschine nach einem der voranstehenden Ansprüche, **dadurch gekennzeichnet, daß** der Schwenkantrieb (190) über ein Schwenkgetriebe (200) auf den Querschlittenträger (55) wirkt.

10. Werkzeugmaschine nach Anspruch 9, **dadurch gekennzeichnet, daß** das Schwenkgetriebe (200) spielarm ausgebildet ist.

11. Werkzeugmaschine nach Anspruch 10, **dadurch gekennzeichnet, daß** das Schwenkgetriebe (200) im wesentlichen spielfrei ausgebildet ist.

12. Werkzeugmaschine nach einem der Ansprüche 9 bis 11, **dadurch gekennzeichnet, daß** das Schwenkgetriebe (200) ein um eine zur Schwenkachse (90) parallele Achse (184) drehbares verzahntes Element (182) umfaßt, welches auf eine Verzahnung (192) des Schwenkantriebsarms (180) wirkt.

13. Werkzeugmaschine nach einem der voranstehenden Ansprüche, **dadurch gekennzeichnet, daß** der Querschlittenträger (55) in Z-Richtung relativ zum Maschinengestell (10) verschiebbar ist.

14. Werkzeugmaschine nach Anspruch 13, **dadurch gekennzeichnet, daß** der Querschlittenträger (55) mittels eines relativ zum Maschinengestell (10) in der Z-Richtung verschiebbaren Längsführungselements (42) am Maschinengestell (10) gelagert ist.

15. Werkzeugmaschine nach Anspruch 14, **dadurch gekennzeichnet, daß** das Längsführungselement (42) als sich in der Z-Richtung erstreckender Führungsarm ausgebildet ist.

16. Werkzeugmaschine nach Anspruch 15, **dadurch gekennzeichnet, daß** der Führungsarm (42) einen den Spindelträger (12) lagernden Ständer (54) am Maschinengestell (10) durchsetzt.

17. Werkzeugmaschine nach Anspruch 15 oder 16, **dadurch gekennzeichnet, daß** der Führungsarm (42) in am Maschinengestell (10) gehaltenen Z-Führungen (170, 172) relativ zum Maschinengestell (10) in der Z-Richtung bewegbar gelagert ist.

18. Werkzeugmaschine nach einem der voranstehenden Ansprüche, **dadurch gekennzeichnet, daß** das Schwenklager (170, 172) für den Querschlittenträger (55) den Führungsarm (42) trägt.

19. Werkzeugmaschine nach Anspruch 18, **dadurch gekennzeichnet, daß** das Schwenklager (170, 172) auch die Z-Führung für den Führungsarm (42) bildet.

20. Werkzeugmaschine nach Anspruch 18 oder 19, **dadurch gekennzeichnet, daß** der Führungsarm (42) als Pinolenkörper ausgebildet ist, welcher in dem Schwenklager (170, 172) in Z-Richtung verschieblich gelagert ist.

21. Werkzeugmaschine nach einem der Ansprüche 8 bis 20, **dadurch gekennzeichnet, daß** der Schwenkantriebsarm (180) drehfest mit dem Führungsarm (42) verbunden ist.

22. Werkzeugmaschine nach Anspruch 21, **dadurch gekennzeichnet, daß** der Schwenkantriebsarm (180) starr mit dem Führungsarm (42) verbunden ist.

23. Werkzeugmaschine nach einem der Ansprüche 12 bis 22, **dadurch gekennzeichnet, daß** der Schwenkantriebsarm (180) in Richtung parallel zur Schwenkachse (90) relativ zum verzahnten Element (182) bewegbar ist.

24. Werkzeugmaschine nach Anspruch 23, **dadurch gekennzeichnet, daß** das verzahnte Element (182) sich in Richtung der Schwenkachse (90) mit einer einem maximalen Verschiebeweg des Querschlittenträgers (55) in Z-Richtung entsprechenden Länge erstreckt.

25. Werkzeugmaschine nach einem der voranstehenden Ansprüche, **dadurch gekennzeichnet, daß** der Querschlittenträger (55) mit einem Quervorschubantrieb (94) zur gesteuerten Bewegung des Querschlittens (58) in der X-Richtung versehen ist.

**26.** Werkzeugmaschine nach Anspruch 25, **dadurch gekennzeichnet, daß** der Quervorschubantrieb (94) auf einer dem Querschlitten (58) gegenüberliegenden Seite des Längsführungselements (42) angeordnet ist.

**27.** Werkzeugmaschine nach einem der Ansprüche 13 bis 26, **dadurch gekennzeichnet, daß** ein Längsvorschubantrieb (70) für die Bewegung des Querschlittenträgers (58) am Maschinengestell (10) angeordnet ist.

**28.** Werkzeugmaschine nach Anspruch 27, **dadurch gekennzeichnet, daß** der Längsvorschubantrieb (70) auf einen sich quer zum Längsführungselement (42) erstreckenden Haltearm (82) wirkt, welcher mit dem Längsführungselement (42) in der Z-Richtung unverschieblich verbunden ist.

**29.** Werkzeugmaschine nach Anspruch 28, **dadurch gekennzeichnet, daß** der Haltearm (82) um die Schwenkachse (90) schwenkbar an dem Längsführungselement (42) gehalten ist.

**30.** Werkzeugmaschine nach Anspruch 29, **dadurch gekennzeichnet, daß** der Haltearm (82) gegen ein Kippen um die Schwenkachse (90) durch eine sich parallel zur Richtung der Schwenkachse (90) erstreckende Kippabstützung (182) gesichert ist.

**31.** Werkzeugmaschine nach Anspruch 30, **dadurch gekennzeichnet, daß** das verzahnte Element (182) die Kippabstützung für den Haltearm (82) bildet.

**32.** Werkzeugmaschine nach Anspruch 31, **dadurch gekennzeichnet, daß** der Haltearm (82) an dem verzahnten Element (182) parallel zur Richtung der Schwenkachse (90) verschiebbar geführt ist.

**33.** Verfahren zum Betreiben einer Werkzeugmaschine mit einem Maschinengestell, mit mindestens einer Werkstückspindel, in welcher ein Werkstück gespannt und um eine Werkstückspindelachse rotierend angetrieben werden kann, mit einem Träger, auf welchem die Werkstückspindel angeordnet ist und mit welchem die Werkstückspindel relativ zum Maschinengestell und quer zur Werkstückspindelachse in mindestens zwei relativ zum Maschinengestell fest vorgegebene Spindelstationen bewegt werden kann und mit mindestens einem einer ausgewählten Spindelstation zugeordneten Werkzeugträger, umfassend einen am Maschinengestell gelagerten Querschlittenträger mit einem Querschlitten für ein Werkzeug, der in einer X-Richtung zu der in der ausgewählten Spindelstation stehenden Werkstückspindel bewegt werden kann, **dadurch gekennzeichnet, daß** das in der Werkstückspindel gehaltene Werkstück mittels einer numerisch gesteuerten C-Achse um die Werkstückspindelachse in definierte Drehstellungen bewegt wird, daß der Querschlittenträger gegenüber dem Maschinengestell um eine zur Werkstückspindelachse der in der ausgewählten Spindelstation stehenden Werkstückspindel parallele Schwenkachse mittels eines Schwenkantriebs numerisch gesteuert bewegt wird, daß auf dem Querschlitten eine Werkzeugspindel zur Aufnahme eines um eine Werkzeugspindelachse rotierend angetriebenen Werkzeugs vorgesehen ist und daß die Werkzeugspindelachse mit der X-Richtung einen Winkel von weniger als 45° einschließt.

**34.** Verfahren nach Anspruch 33, **dadurch gekennzeichnet, daß** die Werkzeugspindelachse durch die Bewegung des Querschlittens in der X-Richtung und um die Schwenkachse in einer senkrecht zur Werkstückspindelachse der in der ausgewählten Spindelstation stehenden Werkstückspindel verlaufenden Ebene bewegt wird.

**35.** Verfahren nach Anspruch 33 oder 34, **dadurch gekennzeichnet, daß** in einem Y-Achsen-Simulationsmodus das Werkstück um die Werkstückspindelachse und der Querschlittenträger um die Schwenkachse simultan derart bewegt werden, daß bei allen zur außermittigen Bearbeitung des Werkstücks durch das angetriebene Werkzeug vorgesehenen außermittigen Stellungen der Werkzeugspindelachse diese stets senkrecht zu einer relativ zum Werkstück feststehend angeordneten und in einer durch die Werkstückspindelachse hindurchverlaufenden virtuellen Ebene liegenden virtuellen Y-Achse verläuft, die durch Drehen des Werkstücks um die Werkstückspindelachse gedreht wird.

**36.** Verfahren nach einem der Ansprüche 33 bis 35, **dadurch gekennzeichnet, daß** in dem Y-Achsen-Simulationsmodus zusätzlich zur C-Achse und zur Schwenkachse das Werkzeug in der X-Achse derart bewegt wird, daß sich eine Schneide des rotierend angetriebenen Werkzeugs in allen mittigen und außermittigen Stellungen der Werkzeugspindelachse stets in einem konstanten Abstand von der virtuellen Ebene bewegt.

**37.** Verfahren nach einem der Ansprüche 33 bis 35, **dadurch gekennzeichnet, daß** in dem Y-Achsen-Simulationsmodus in einer bestimmten außermittigen Stellung der Werkzeugspindelachse der diese Stellung bestimmende Y-Wert der simulierten Y-Achse aufrechterhalten wird und während des Aufrechterhaltens dieser Stellung das Werkzeug durch die X-Achse und gegebenenfalls durch die C-Achse und die Schwenkachse senkrecht zur virtuellen Ebene linear bewegt wird.

**Claims**

1. Machine tool comprising a machine frame (10), at least one workpiece spindle (20) in which a workpiece is clampable and drivable for rotation about a workpiece spindle axis (22), a support on which the workpiece spindle is arranged and with which the workpiece spindle is movable relative to the machine frame and transversely to the workpiece spindle axis into at least two spindle stations fixedly defined relative to the machine frame, and at least one tool carrier associated with a selected one of the spindle stations, comprising a transverse slide carrier (55) mounted on the machine frame with a transverse slide for a tool movable in an X direction relative to the workpiece spindle located in the selected spindle station, **characterized in that** the workpiece (W) held in the workpiece spindle (20) is rotatable about the workpiece spindle axis (22) into defined rotary positions by means of a numerically controlled C-axis, that the transverse slide carrier (55) is pivotable in relation to the machine frame (10) about a pivot axis (90) parallel to the workpiece spindle axis (22) of the workpiece spindle (20) located in the selected spindle station (III) by means of a pivot drive (190) in a numerically controlled manner, that a tool spindle (162) is provided on the transverse slide (58) for receiving a tool (166, 210) drivable for rotation about a tool spindle axis (164), and that the tool spindle axis (164) forms with the X direction an angle of less than 45°.

2. Machine tool as defined in claim 1, **characterized in that** the tool spindle axis (164) extends in all positions of the transverse slide (58) in a plane (E) extending at right angles to the workpiece spindle axis (22) of the workpiece spindle (20) located in the selected spindle station (III).

3. Machine tool as defined in claim 1 or 2, **characterized in that** a machine control (39) is provided for moving the workpiece (W) in a Y-axis simulation mode about the workpiece spindle axis (22) and the transverse slide carrier (55) about the pivot axis (90) simultaneously in such a manner that in all the off-centre positions of the tool spindle axis (164) provided for the off-centre machining of the workpiece (W) by the driven tool (166, 210) this tool spindle axis always extends at right angles to a virtual Y-axis arranged so as to be stationary relative to the workpiece (W) and located in a virtual plane (V) extending through the workpiece spindle axis (22).

4. Machine tool as defined in any one of claims 1 to 3, **characterized in that** in the Y-axis simulation mode the machine control (39) controls the X-axis in addition to the C-axis and to the pivot axis in such a manner that a cutting edge of the rotatingly driven tool (166) always moves at a constant distance (H) from the virtual plane (V) in all the off-centre positions of the tool spindle axis (164).

5. Machine tool as defined in any one of claims 1 to 3, **characterized in that** in the Y-axis simulation mode in a specific off-centre position of the tool spindle axis (164) the machine control (39) maintains a Y-value corresponding to this position and while this position is being maintained moves the tool (210) linearly at right angles to the virtual plane (V) at least by control of the X-axis.

6. Machine tool as defined in any one of the preceding claims, **characterized in that** the tool spindle axis (164) extends parallel to the X-axis.

7. Machine tool as defined in any one of the preceding claims, **characterized in that** the transverse slide carrier (55) is rotatable about a pivot bearing (170, 172) securely arranged on the machine frame (10) and determining the pivot axis (90).

8. Machine tool as defined in any one of the preceding claims, **characterized in that** the transverse slide carrier (55) is connected to a pivot drive arm (180) which extends radially to the pivot axis (90), and on which the pivot drive (190) acts.

9. Machine tool as defined in any one of the preceding claims, **characterized in that** the pivot drive (190) acts on the transverse slide carrier (55) via a turning gear (200).

10. Machine tool as defined in claim 9, **characterized in that** the turning gear (200) is designed to have little play.

11. Machine tool as defined in claim 10, **characterized in that** the turning gear (200) is designed to be essentially free from play.

12. Machine tool as defined in any one of claims 9 to 11, **characterized in that** the turning gear (200) comprises a toothed element (182) which is rotatable about an axis (184) parallel to the pivot axis (90) and acts on teeth (192) of the pivot drive arm (180).

13. Machine tool as defined in any one of the preceding claims, **characterized in that** the transverse slide carrier (55) is displaceable in Z direction relative to the machine frame (10).

14. Machine tool as defined in claim 13, **characterized in that** the transverse slide carrier (55) is mounted on the machine frame (10) by means of a longitudinal guide element (42) displaceable in the Z direction relative to the machine frame (10).

15. Machine tool as defined in claim 14, **characterized in that** the longitudinal guide element (42) is designed as a guide arm extending in the Z direction.

16. Machine tool as defined in claim 15, **characterized in that** the guide arm (42) passes through an upright (54) on the machine frame (10) mounting the spindle carrier (12).

17. Machine tool as defined in claim 15 or 16, **characterized in that** the guide arm (42) is mounted in Z-guide means (170, 172) held on the machine frame (10) so as to be movable in the Z direction relative to the machine frame (10).

18. Machine tool as defined in any one of the preceding claims, **characterized in that** the pivot bearing (170, 172) for the transverse slide carrier (55) supports the guide arm (42).

19. Machine tool as defined in claim 18, **characterized in that** the pivot bearing (170, 172) also forms the Z-guide means for the guide arm (42).

20. Machine tool as defined in claim 18 or 19, **characterized in that** the guide arm (42) is designed as a spindle sleeve member mounted in the pivot bearing (170, 172) for displacement in Z direction.

21. Machine tool as defined in any one of claims 8 to 20, **characterized in that** the pivot drive arm (180) is non-rotatably connected to the guide arm (42).

22. Machine tool as defined in claim 21, **characterized in that** the pivot drive arm (180) is rigidly connected to the guide arm (42).

23. Machine tool as defined in any one of claims 12 to 22, **characterized in that** the pivot drive arm (180) is movable relative to the toothed element (182) in the direction parallel to the pivot axis (90).

24. Machine tool as defined in claim 23, **characterized in that** the toothed element (182) extends in the direction of the pivot axis (90) with a length corresponding to a maximum path of displacement of the transverse slide carrier (55) in Z direction.

25. Machine tool as defined in any one of the preceding claims, **characterized in that** the transverse slide carrier (55) is provided with a transverse feed drive (94) for the controlled movement of the transverse slide (58) in the X direction.

26. Machine tool as defined in claim 25, **characterized in that** the transverse feed drive (94) is arranged on a side of the longitudinal guide element (42) located opposite the transverse slide (58).

27. Machine tool as defined in any one of claims 13 to 26, **characterized in that** a longitudinal feed drive (70) for the movement of the transverse slide carrier (58) is arranged on the machine frame (10).

28. Machine tool as defined in claim 27, **characterized in that** the longitudinal feed drive (70) acts on a supporting arm (82) which extends transversely to the longitudinal guide element (42) and is connected to the longitudinal guide element (42) so as to be non-displaceable in the Z direction.

29. Machine tool as defined in claim 28, **characterized in that** the supporting arm (82) is held on the longitudinal guide element (42) so as to be pivotable about the pivot axis (90).

30. Machine tool as defined in claim 29, **characterized in that** the supporting arm (82) is secured against tilting about the pivot axis (90) by a tilt support (182) extending parallel to the direction of the pivot axis (90).

31. Machine tool as defined in claim 30, **characterized in that** the toothed element (182) forms the tilt support for the supporting arm (82).

32. Machine tool as defined in claim 31, **characterized in that** the supporting arm (82) is guided on the toothed element (182) for displacement parallel to the direction of the pivot axis (90).

33. Method for operating a machine tool with a machine frame, with at least one workpiece spindle in which a workpiece is clampable and drivable for rotation about a workpiece spindle axis, with a support on which the workpiece spindle is arranged and with which the workpiece spindle is movable relative to the machine frame and transversely to the workpiece spindle axis into at least two spindle stations fixedly defined relative to the machine frame, and with at least one tool carrier associated with a selected spindle station, comprising a transverse slide carrier mounted on the machine frame with a transverse slide for a tool movable in an X direction relative to the workpiece spindle located in the selected spindle station, **characterized in that** the workpiece held in the workpiece spindle is moved about the workpiece spindle axis into defined rotary positions by means of a numerically controlled C-axis, that the transverse slide carrier is moved in relation to the machine frame about a pivot axis parallel to the workpiece spindle axis of the workpiece spindle located in the selected spindle station by means of a pivot drive in a numerically controlled manner, that a tool spindle for receiving a tool driven for rotation about a tool spindle axis is provided on the transverse slide, and that the tool spindle axis forms with the X direction an angle of less than 45°.

34. Method as defined in claim 33, **characterized in that** the tool spindle axis is moved in a plane extending at right angles to the workpiece spindle axis of the workpiece spindle located in the selected spindle station due to the movement of the transverse slide in the X direction and about the pivot axis.

35. Method as defined in claim 33 or 34, **characterized in that** in a Y-axis simulation mode the workpiece is moved about the workpiece spindle axis and the transverse slide carrier about the pivot axis simultaneously in such a manner that in all the off-centre positions of the tool spindle axis provided for the off-centre machining of the workpiece by the driven tool this tool spindle axis always extends at right angles to a virtual Y-axis which is arranged so as to be stationary relative to the workpiece and lies in a virtual plane extending through the workpiece spindle axis and which is turned by turning the workpiece about the workpiece spindle axis.

36. Method as defined in any one of claims 33 to 35, **characterized in that** in the Y-axis simulation mode the tool is moved in the X-axis in addition to the C-axis and to the pivot axis in such a manner that a cutting edge of the rotatingly driven tool always moves at a constant distance from the virtual plane in all the centre and off-centre positions of the tool spindle axis.

37. Method as defined in any one of claims 33 to 35, **characterized in that** in the Y-axis simulation mode in a specific off-centre position of the tool spindle axis the Y-value of the simulated Y-axis determining this position is maintained and while this position is being maintained the tool is moved linearly through the X-axis and possibly through the C-axis and the pivot axis at right angles to the virtual plane.

## Revendications

1. Machine-outil comprenant un bâti de machine (10), au moins une broche de pièce à usiner (20) dans laquelle une pièce à usiner peut être serrée et entraînée en rotation autour d'un axe de broche de pièce à usiner (22), un support sur lequel la broche de pièce à usiner est disposée et par lequel la broche de pièce à usiner peut être déplacée par rapport au bâti de machine et transversalement à l'axe de broche de pièce à usiner dans au moins deux stations de broche prédéterminées par rapport au bâti de machine, et au moins un support d'outil associé à l'une des stations de broche sélectionnée, comprenant un support de chariot transversal (55) logé au niveau du bâti de machine avec un chariot transversal pour un outil pouvant être déplacé dans une direction X par rapport à la broche de pièce à usiner située dans la station de broche sélectionnée, **caractérisée en ce que** la pièce à usiner (W) tenue dans la broche de pièce à usiner (20) peut tourner dans des positions de rotation définies autour de l'axe de broche de pièce à usiner (22) au moyen d'un axe C à commande numérique, **en ce que** le support de chariot transversal (55) est pivotant, au moyen d'un entraînement de pivotement (190) à commande numérique, par rapport au bâti de machine (10) autour d'un axe de pivotement (90) parallèle à l'axe de broche de pièce à usiner (22) de la broche de pièce à usiner (20) se trouvant dans la station de broche (III) sélectionnée, **en ce que** sur le chariot transversal (58) une broche d'outil (162) est prévue pour recevoir un outil (166, 210) entraîné en rotation autour d'un axe de broche d'outil (164), et **en ce que** l'axe de broche d'outil (164) présente avec la direction X un angle inférieur à 45°.

2. Machine-outil selon la revendication 1, **caractérisée en ce que** dans toutes les positions du chariot transversal (58) l'axe de broche d'outil (164) s'étend dans un plan (E) s'étendant verticalement à l'axe de broche de pièce à usiner (22) de la broche de pièce à usiner (20) se trouvant dans la station de broche (III) sélectionnée.

3. Machine-outil selon la revendication 1 ou 2, **caractérisée en ce qu'**une commande de machine (39) est prévue permettant de déplacer simultanément, dans un mode de simulation d'axe Y, la pièce à usiner (W) autour de l'axe de broche d'outil (164) et le support de chariot transversal (55) autour de l'axe de pivotement (90), de telle sorte que dans toutes les positions excentrées de l'axe de broche d'outil (22) prévues pour un usinage excentré de la pièce à usiner (W) par l'outil (166, 210) entraîné, l'axe de broche d'outil s'étende toujours verticalement dans un axe Y virtuel disposé de manière fixe par rapport à la pièce à usiner (W) et situé dans un plan (V) virtuel traversant l'axe de broche de pièce à usiner (22).

4. Machine-outil selon l'une quelconque des revendications 1 à 3, **caractérisée en ce que** la commande de machine (39), en mode de simulation d'axe Y, commande l'axe X, en plus de l'axe C et de l'axe de pivotement, de telle sorte que dans toutes les positions excentrées de l'axe de broche d'outil (164) un élément coupant de l'outil (166) entraîné en rotation se déplace toujours à une distance (H) constante par rapport au plan virtuel (V).

**5.** Machine-outil selon l'une quelconque des revendications 1 à 3, **caractérisée en ce que** la commande de machine (39), en mode de simulation de l'axe Y, maintient dans une position excentrée déterminée de l'axe de broche d'outil (164) une valeur Y correspondant à cette position, et pendant le maintien de cette position déplace linéairement, du moins par la commande de l'axe X, l'outil (210) perpendiculairement au plan virtuel (V).

**6.** Machine-outil selon l'une quelconque des revendications précédentes, **caractérisée en ce que** l'axe de broche d'outil (164) s'étend parallèlement à l'axe X.

**7.** Machine-outil selon l'une quelconque des revendications précédentes, **caractérisée en ce que** le support de chariot transversal (55) peut tourner autour d'un coussinet de pivotement (170, 172) disposé sur le bâti de machine (10) et définissant l'axe de pivotement (90).

**8.** Machine-outil selon l'une quelconque des revendications précédentes, **caractérisée en ce que** le support de chariot transversal (55) est relié à un bras d'entraînement de pivotement (180) s'étendant radialement à l'axe de pivotement (90) et sur lequel agit l'entraînement de pivotement (190).

**9.** Machine-outil selon l'une quelconque des revendications précédentes, **caractérisée en ce que** l'entraînement de pivotement (190) agit sur le support de chariot transversal (55) par l'intermédiaire d'un mécanisme de pivotement (200).

**10.** Machine-outil selon la revendication 9, **caractérisée en ce que** le mécanisme de pivotement (200) présente un faible jeu.

**11.** Machine-outil selon la revendication 10, **caractérisée en ce que** le mécanisme de pivotement (200) ne présente pour l'essentiel aucun jeu.

**12.** Machine-outil selon l'une quelconque des revendications 9 à 11, **caractérisée en ce que** le mécanisme de pivotement (200) comprend un élément denté (182) pouvant tourner autour d'un axe (184) parallèle à l'axe de pivotement (90) et qui agit sur une denture (192) du bras d'entraînement de pivotement (180).

**13.** Machine-outil selon l'une quelconque des revendications précédentes, **caractérisée en ce que** le support de chariot transversal (55) peut être déplacé dans la direction Z par rapport au bâti de machine (10).

**14.** Machine-outil selon la revendication 13, **caractérisée en ce que** le support de chariot transversal (55) est logé dans le bâti de machine (10) au moyen d'un élément de guidage longitudinal (42) pouvant être déplacé dans la direction Z.

**15.** Machine-outil selon la revendication 14, **caractérisée en ce que** l'élément de guidage longitudinal (42) présente la forme d'un bras de guidage s'étendant dans la direction Z.

**16.** Machine-outil selon la revendication 15, **caractérisée en ce que** le bras de guidage (42) traverse un montant (54) logeant le support de broche (12) dans le bâti de machine (10).

**17.** Machine-outil selon la revendication 15 ou 16, **caractérisée en ce que** le bras de guidage (42) est logé de manière mobile par rapport au bâti de machine (10) dans la direction Z dans des guidages Z (170, 172) disposés dans le bâti de machine (10).

**18.** Machine-outil selon l'une quelconque des revendications précédentes, **caractérisée en ce que** le coussinet de pivotement (170, 172) porte des bras de guidage (42) pour le support de chariot transversal (55).

**19.** Machine-outil selon la revendication 18, **caractérisée en ce que** le coussinet de pivotement (170, 172) forme également le guidage Z pour le bras de guidage (42).

**20.** Machine-outil selon la revendication 18 ou 19, **caractérisée en ce que** le bras de guidage (42) présente la forme d'un corps de fourreau qui est logé de manière mobile dans la direction Z dans le coussinet de pivotement (170, 172).

**21.** Machine-outil selon l'une quelconque des revendications 8 à 20, **caractérisée en ce que** le bras d'entraînement de pivotement (180) est relié de manière immobile en rotation au bras de guidage (42).

**22.** Machine-outil selon la revendication 21, **caractérisée en ce que** le bras d'entraînement de pivotement (180) est relié de manière rigide au bras de guidage (42).

**23.** Machine-outil selon l'une quelconque des revendications 12 à 22, **caractérisée en ce que** le bras d'entraînement de pivotement (180) peut être déplacé par rapport à l'élément denté (182) dans la direction parallèle à l'axe de pivotement (90).

**24.** Machine-outil selon la revendication 23, **caractéri-**

**sée en ce que** l'élément denté (182) s'étend dans la direction de l'axe de pivotement (90) sur une longueur correspondant à une course de déplacement maximale du support de chariot transversal (55).

25. Machine-outil selon l'une quelconque des revendications précédentes, **caractérisée en ce que** le support de chariot transversal (55) est muni d'un entraînement d'avance transversale (94) pour déplacer de manière commandée le chariot transversal (58) dans la direction X.

26. Machine-outil selon la revendication 25, **caractérisée en ce que** l'entraînement d'avance transversale (94) est disposé au niveau d'une face de l'élément de guidage longitudinal (42) située en regard du chariot transversal (58).

27. Machine-outil selon l'une quelconque des revendications 13 à 26, **caractérisée en ce qu'**un entraînement d'avance longitudinale (70) est disposé au bâti de machine (10) pour le déplacement du support de chariot transversal (58).

28. Machine-outil selon la revendication 27, **caractérisée en ce que** l'entraînement d'avance longitudinale (70) agit sur un bras de maintien (82) s'étendant transversalement à l'élément de guidage longitudinal (42) et qui est relié de manière immobile dans la direction Z à l'élément de guidage longitudinal (42).

29. Machine-outil selon la revendication 28, **caractérisée en ce que** le bras de maintien (82) est tenu sur l'élément de guidage longitudinal (42) de manière pivotante autour de l'axe de pivotement (90).

30. Machine-outil selon la revendication 29, **caractérisée en ce que** le bras de maintien (82) est protégé contre un basculement autour de l'axe de pivotement (90) par un appui de basculement (182) s'étendant parallèlement à la direction de l'axe de pivotement (90).

31. Machine-outil selon la revendication 30, **caractérisée en ce que** l'élément denté (182) forme l'appui de basculement pour le bras de maintien (82).

32. Machine-outil selon la revendication 31, **caractérisée en ce que** le bras de maintien (82) est guidé sur l'élément denté (182) en déplacement parallèle à la direction de l'axe de pivotement (90).

33. Procédé pour faire fonctionner une machine-outil comprenant un bâti de machine, avec au moins une broche de pièce à usiner, dans laquelle une pièce à usiner peut être serrée et entraînée en rotation autour d'un axe de broche de pièce à usiner, avec un support sur lequel la broche de pièce à usiner est disposée et par lequel la broche de pièce à usiner peut être déplacée par rapport au bâti de machine et transversalement à l'axe de broche de pièce à usiner dans au moins deux stations de broche prédéterminées par rapport au bâti de machine, et avec au moins un support d'outil associé à l'une des stations de broche sélectionnée, comprenant un support de chariot transversal logé au niveau du bâti de machine avec un chariot transversal pour un outil pouvant être déplacé dans une direction X par rapport à la broche de pièce à usiner située dans la station de broche sélectionnée, **caractérisé en ce que** la pièce à usiner tenue dans le broche de pièce à usiner est pivotante dans des positions de pivotement définies autour de l'axe de broche de pièce à usiner au moyen d'un axe C à commande numérique, **en ce que** le support de chariot transversal est mobile, au moyen d'un entraînement de pivotement à commande numérique, par rapport au bâti de machine autour d'un axe de pivotement parallèle à l'axe de broche de pièce à usiner de la broche de pièce à usiner (20) se trouvant dans la station de broche sélectionnée, **en ce que** sur le chariot transversal une broche d'outil est prévue pour recevoir un outil entraîné en rotation autour d'un axe de broche d'outil, et **en ce que** l'axe de broche d'outil enferme avec la direction X un angle inférieur à 45°.

34. Procédé selon la revendication 33, **caractérisé en ce que** l'axe de broche d'outil est déplacé par le mouvement du chariot transversal dans la direction X et autour de l'axe de pivotement dans un plan s'étendant perpendiculairement à l'axe de broche de pièce à usiner de la broche de pièce à usiner se trouvant dans la station de broche sélectionnée.

35. Procédé selon la revendication 33 ou 34, **caractérisé en ce que** dans un mode de simulation d'axe Y la pièce à usiner est déplacée autour de l'axe de broche d'outil et simultanément le support de chariot transversal autour de l'axe de pivotement, de telle sorte que dans toutes les positions excentrées de l'axe de broche d'outil prévues pour un usinage excentré de la pièce à usiner par l'outil entraîné, l'axe de broche d'outil s'étende toujours perpendiculairement dans un axe Y virtuel disposé de manière fixe par rapport à la pièce à usiner et situé dans un plan virtuel traversant l'axe de broche de pièce à usiner, mis en rotation par la rotation de la pièce à usiner autour de l'axe de broche de pièce à usiner.

36. Procédé selon l'une quelconque des revendications 33 à 35, **caractérisé en ce qu'**en mode de simulation de l'axe Y, en plus de l'axe C et de l'axe de pivotement, l'outil est déplacé dans l'axe X de telle sorte que dans toutes les positions centrées et excentrées de l'axe de broche d'outil un élément coupant d'outil entraîné en rotation se déplace toujours à une distance constante par rapport au plan virtuel.

**37.** Procédé selon l'une quelconque des revendications 33 à 35, **caractérisé en ce qu'**en mode de simulation de l'axe Y, dans une position excentrée déterminée de l'axe de broche d'outil, la valeur Y de l'axe Y simulé déterminant cette position est maintenue, et **en ce que** pendant ce maintien de cette position l'outil est déplacé linéairement par l'axe X et le cas échéant par l'axe C et l'axe de pivotement perpendiculairement au plan virtuel.

FIG.1

# FIG.2

# FIG.3

EP 1 025 953 B1

FIG.4

FIG.5

FIG.6

FIG.7

EP 1 025 953 B1

FIG.8

FIG.9

FIG. 10

W

III

# FIG.11

# FIG.12